(19) Europäisches Patentamt
European Patent Office
Office européen des brevets

(11) **EP 4 729 383 A1**

(12) **EUROPEAN PATENT APPLICATION**
published in accordance with Art. 153(4) EPC

(43) Date of publication:
**22.04.2026 Bulletin 2026/17**

(21) Application number: **24823115.1**

(22) Date of filing: **24.04.2024**

(51) International Patent Classification (IPC):
**B60W 40/06** (2012.01)    **B60W 40/114** (2012.01)

(52) Cooperative Patent Classification (CPC):
**B60W 40/06; B60W 40/114**

(86) International application number:
**PCT/JP2024/016128**

(87) International publication number:
**WO 2024/257493 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.06.2023 JP 2023097275**

(71) Applicant: **DENSO CORPORATION
Kariya-city, Aichi 448-8661 (JP)**

(72) Inventors:
• **KUBOTA, Masaru
Kariya-city, Aichi 448-8661 (JP)**
• **LIU, Haibo
Kariya-city, Aichi 448-8661 (JP)**
• **KAWAI, Keisuke
Kariya-city, Aichi 448-8661 (JP)**
• **KAMIO, Shigeru
Kariya-city, Aichi 448-8661 (JP)**
• **FUJITA, Yoshitaka
Toyota-shi, Aichi 471-8571 (JP)**
• **SANADA, Takeru
Toyota-shi, Aichi 471-8571 (JP)**

(74) Representative: **TBK
Bavariaring 4-6
80336 München (DE)**

(54) **CONTROL DEVICE AND CONTROL PROGRAM**

(57)    A control device (10) includes a driving force acquisition unit (31) configured to acquire driving force applied by a vehicle (100) to a road surface, a longitudinal acceleration acquisition unit (32) configured to acquire longitudinal acceleration that is acceleration along a longitudinal direction of the vehicle, an angle calculation unit (61) configured to calculate a trajectory angle (0) that is an angle formed by a trajectory of a rotation center axis of a wheel (104) of the vehicle with respect to the road surface, based on the driving force and the longitudinal acceleration, and a height estimation unit (62) configured to estimate a step height (H, H1 to H3) that is a height of a step (200) provided on the road surface, based on the trajectory angle.

FIG.5

EP 4 729 383 A1

**Description**

[Cross-Reference to Related Application]

This application is based on and claims the benefit of priority from Japanese Patent Application No.2023-097275, filed on June 13, 2023, the entire contents of which are incorporated herein by reference.

[Technical Field]

The present disclosure relates to a control device and a control program.

[Background Art]

Japanese Patent Application Laid-Open No.2019-093761 describes a device that can estimate the height of a step when a vehicle wheel comes into contact with the step. According to this device, if the step is a wheel stopper, it is possible to generate an appropriate braking force to stop the vehicle before the wheel goes over the step. If the step is not a wheel stopper, it is possible to generate a necessary and appropriate driving force to climb-over the step, allowing the vehicle to climb-over the step while preventing the vehicle from jumping out.

[Summary of the Invention]

In the above-described device, after a vehicle wheel comes into contact with the step, the driving force is gradually increased and the height of the step is estimated based on the value of torque at the timing at which the wheel starts to move. The timing at which the wheel starts to move is determined based on the value of measurement by a vehicle speed sensor.

However, the inventor's detailed investigation has found the issue described below. That is, it is difficult for a general vehicle speed sensor to detect extremely low vehicle speeds, for example, 1 km/h or less. Therefore, in the device described in PTL 1, the timing at which the wheel has been determined as starting to move may lag behind the timing at which the wheel actually starts to move. In this case, the timing at which the height of the step can be accurately estimated is delayed, and as a result, the timing at which braking force is generated is delayed. This may cause a situation where the wheel goes over the wheel stopper.

The present disclosure aims to provide a control device and a control program that make it possible to accurately and quickly estimate the height of a step.

The control device according to the present disclosure includes a driving force acquisition unit that acquires driving force applied by a vehicle to a road surface, a longitudinal acceleration acquisition unit that acquires longitudinal acceleration that is acceleration along a longitudinal direction of the vehicle, an angle calculation unit that calculates a trajectory angle that is an angle formed by a trajectory of a rotation center axis of a wheel of the vehicle makes with respect to the road surface, based on the driving force and the longitudinal acceleration, and a height estimation unit that estimates a step height that is a height of a step provided on the road surface, based on the trajectory angle.

The control program of the present disclosure is a control program for causing a computer to execute processing including a driving force acquisition step for acquiring driving force applied by a vehicle to a road surface, a longitudinal acceleration acquisition step for acquiring longitudinal acceleration that is acceleration along a longitudinal direction of the vehicle, an angle calculation step for calculating a trajectory angle that is an angle formed by a trajectory of a rotation center axis of a wheel of the vehicle with respect to the road surface, based on the driving force and the longitudinal acceleration, and a height estimation step for estimating a step height that is a height of a step provided on the road surface, based on the trajectory angle.

According to the present disclosure, there are provided a control device and a control program that make it possible to accurately and quickly estimate the height of a step.

[Brief Description of the Drawings]

Fig. 1 is a block diagram illustrating an example of a configuration of a vehicle equipped with a control device according to an embodiment of the present disclosure.
Fig. 2 is a side view illustrating an example of a state in which a wheel is in contact with a step.
Fig. 3 is a block diagram illustrating an example of a hardware configuration of the control device.
Fig. 4 is a block diagram illustrating an example of a functional configuration of the control device.

Fig. 5 is a block diagram illustrating an example of a height estimation process and a configuration related thereto.

Fig. 6A to Fig. 6B are a joint graph illustrating an example of a trajectory and trajectory angle of a rotation center axis of a wheel in a case where a vehicle travels toward a step.

Fig. 7 is a block diagram illustrating an example of a two-wheel/one-wheel determination process and a configuration related thereto according to a first example.

Fig. 8 is a block diagram illustrating an example of a two-wheel/one-wheel determination process and a configuration related thereto according to a second example.

Fig. 9 is a block diagram illustrating an example of a two-wheel/one-wheel determination process and a configuration related thereto according to a third example.

Fig. 10 is a block diagram illustrating an example of a front-wheel/rear-wheel determination process and a configuration related thereto.

Fig. 11 is a block diagram illustrating an example of a step determination process and a configuration related thereto.

Fig. 12 is a front view illustrating an example of a state in which one wheel has climbed up on a step.

Fig. 13 is a block diagram illustrating an example of a right-after-start determination process and a configuration related thereto.

Fig. 14 is a block diagram illustrating an example of a mode determination process and a configuration related thereto.

Fig. 15 is a block diagram illustrating an example of an instruction unit and a configuration related thereto.

Fig. 16 is a flowchart illustrating an example of a flow of a control process.

Fig. 17 is a flowchart illustrating an example of the two-wheel/one-wheel determination process according to the first example.

Fig. 18 is a flowchart illustrating an example of the two-wheel/one-wheel determination process according to the second example.

Fig. 19 is a flowchart illustrating an example of the two-wheel/one-wheel determination process according to the third example.

Fig. 20 is a flowchart illustrating an example of the front-wheel/rear-wheel determination process.

Fig. 21 is a flowchart illustrating an example of the right-after-start determination process.

Fig. 22 is a first timing chart illustrating a first operation example of the control device.

Fig. 23 is a second timing chart illustrating the first operation example of the control device.

Fig. 24 is a first timing chart illustrating a second operation example of the control device.

Fig. 25 is a second timing chart illustrating the second operation example of the control device.

Fig. 26A to Fig. 26B are a joint schematic diagram illustrating a third operation example of the control device.

Fig. 27A to Fig. 27B are a joint schematic diagram illustrating a fourth operation example of the control device.

Fig. 28A to Fig. 28B are a joint schematic diagram illustrating a fifth operation example of the control device.

Fig. 29A to Fig. 29B are a joint schematic diagram illustrating a sixth operation example of the control device.

Fig. 30A to Fig. 30B are a joint schematic diagram illustrating a seventh operation example of the control device.

Fig. 31A to Fig. 31B are a joint schematic diagram illustrating an eighth operation example of the control device.

Fig. 32A to Fig. 32B are a joint schematic diagram illustrating a ninth operation example of the control device.

[Description of the Embodiments]

Hereinafter, the present embodiment will be described with reference to the accompanying drawings. To facilitate understanding of the description, the same components in the drawings are denoted by the same reference numerals whenever possible, and duplicate descriptions will be omitted.

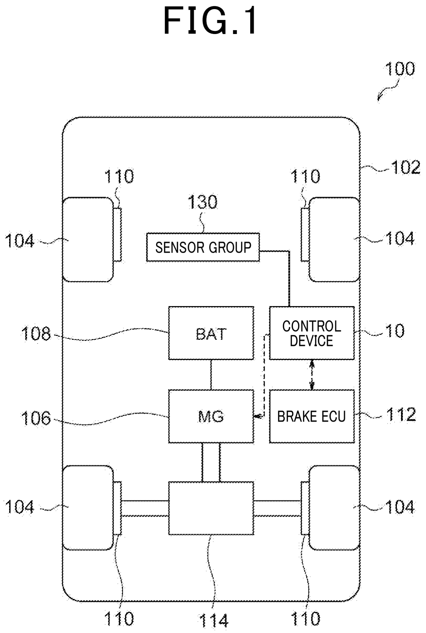

As illustrated in Fig. 1, a control device 10 according to the present embodiment is mounted in a vehicle 100 and configured as a device for controlling the vehicle 100 and the like. Before describing the control device 10, a configuration of the vehicle 100 will be described.

The vehicle 100 is a vehicle that travels based on driving operations performed by a driver. However, if a wheel 104 comes into contact with a step described later, some driving operations (for example, braking) may be automatically performed by the control device 10. The vehicle 100 includes a vehicle body 102, a plurality of wheels 104, a rotating electric machine 106, a battery 108, and a sensor group 130.

The vehicle body 102 is the body member of the vehicle 100 and is also called "body". The number of the plurality of wheels 104 is four. That is, the vehicle 100 is a four-wheel vehicle. The plurality of wheels 104 includes a wheel 104 on the left front side, a wheel 104 on the right front side, a wheel 104 on the left rear side, and a wheel 104 on the right rear side. Hereinafter, the wheels 104 on the front side will be referred to as "front wheels", and the wheels 104 on the rear side will be referred to as "rear wheels". The wheels 104 on the left and right sides will be referred to as "two wheels", and one of the two wheels will be referred to as "one wheel". As an example, the front wheels are driven wheels and the rear wheels are driving wheels. The rear wheels are rotated by the driving force of the rotating electric machine 106 (described later), causing the vehicle 100 to travel.

In this manner, the vehicle 100 of the present embodiment is configured as a rear-wheel drive vehicle. The vehicle 100 may be configured as a front-wheel drive vehicle or a four-wheel drive vehicle. In the case of a four-wheel drive vehicle, in addition to the rotating electric machine 106 for driving the rear wheels, a rotating electric machine for driving the front wheels may be provided separately.

The wheels 104 are provided with braking devices 110. The braking devices 110 are braking devices that apply a braking force to the wheels 104 hydraulically or electrically. The operations of the braking devices 110 are controlled by a brake electronic control unit (ECU) 112 described later.

The rotating electric machine 106 is a device that receives a supply of electric power from the battery 108 (described later) and generates a driving force for rotating the rear wheels, that is, a driving force required for the vehicle 100 to travel. The rotating electric machine 106 is a "motor generator". The driving force generated by the rotating electric machine 106 is transferred to the rear wheels via a powertrain mechanism 114, thereby causing the rear wheels to rotate. The interchange of power between the battery 108 and the rotating electric machine 106 is carried out via an inverter (not illustrated) which is a power converter. The inverter controls the operations of the rotating electric machine 106 in response to instructions from the control device 10.

The rotating electric machine 106 generates a driving force for accelerating the vehicle 100, and can also generate a braking force for decelerating the vehicle 100 through regeneration. The vehicle 100 can be braked by the rotating electric machine 106 or by the braking devices 110 described above.

The battery 108 is a rechargeable battery for supplying driving power to the rotating electric machine 106. In the present embodiment, the battery 108 is a lithium ion battery. Regenerative electric power generated by the rotating electric machine 106 during braking is supplied to the battery 108 via the inverter, thereby charging the battery 108.

The vehicle 100 is provided with the brake ECU 112 separate from the control device 10. As will be described later, both the control device 10 and the brake ECU 112 are configured as computers having a central processing unit (CPU), a read only memory (ROM), a random access memory (RAM), and the like. The CPU, ROM, and RAM can communicate with each other bidirectionally via a network provided in the vehicle 100. The brake ECU 112 performs processing to control the operations of the braking device 110 in response to instructions from the control device 10.

The control device 10 and the brake ECU 112 do not have to be separated into two devices, unlike in the present embodiment. For example, the functions of the brake ECU 112 may be integrated into the control device 10. In implementing the functions of the control device 10 described later, the specific configuration thereof is not particularly limited.

The sensor group 130 includes a plurality of sensors that detects various physical quantities in the vehicle 100. Each sensor outputs a signal corresponding to the detected physical quantity. The plurality of sensors is provided in various parts of the vehicle 100. In Fig. 1, the plurality of sensors is depicted as the sensor group 130 in a single block. The sensor group 130 is communicably connected to the control device 10.

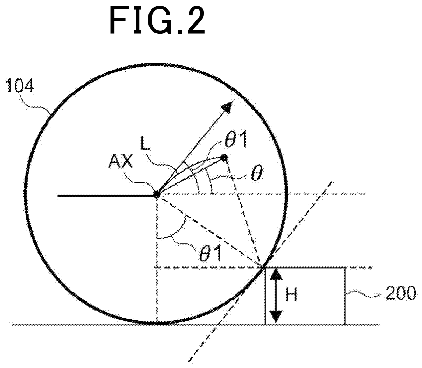

Fig. 2 illustrates a state of the wheel 104 in contact with a step 200. The step 200 is provided on a road surface, and a height H (hereinafter, referred to as "step height H") is generated between the step 200 and the road surface. In the example illustrated in Fig. 2, the step 200 is a car stop, for example. A car stop is an example of a step not to be gone over (in other words, a step that does not allow a vehicle to climb-over). Here, a car stop is illustrated as an example of a step not to be gone over, but the step may also be a curb. The step not to be gone over may be any step.

If the vehicle 100 in the state illustrated in Fig. 2 attempts to move towards the step 200, the wheel 104 will climb up onto the step 200. Although Fig. 2 illustrates a step not to be climbed over, there are cases where the step 200 is a step to be climbed over (in other words, a step that allows a vehicle to climb over). Examples of the step to be climbed over include low curbs, gently sloping speed bumps, and others. As described in detail later, when the wheel 104 has climbed up onto the step 200, the control device 10 estimates the step height H and controls the driving force and braking force of the vehicle 100 based on the estimated step height H. The "ground contact length L", "trajectory angle θ", and "trajectory angle θ1" illustrated in Fig. 2 will be described later.

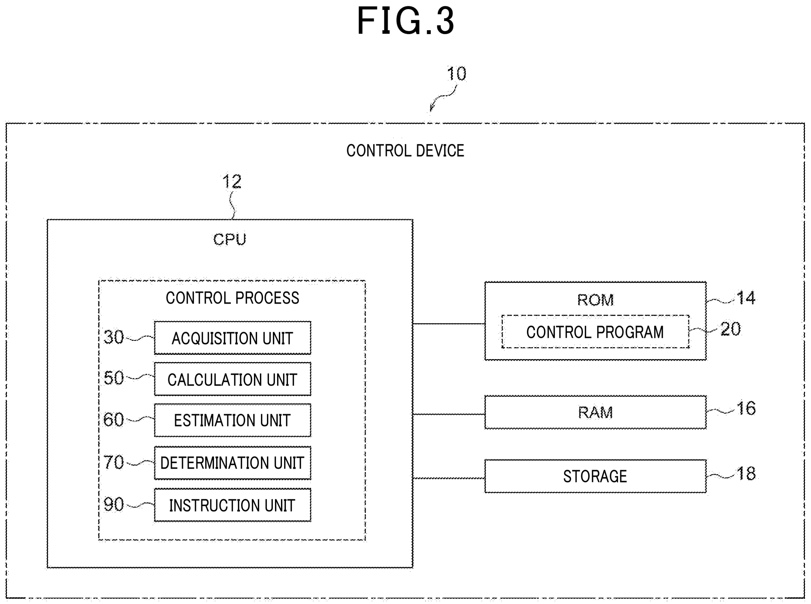

As illustrated in Fig. 3, the control device 10 has, as its hardware configuration, a CPU 12, a ROM 14, a RAM 16, and a storage 18. The CPU 12, ROM 14, RAM 16, and storage 18 are communicably connected to each other via a bus (not illustrated).

The CPU 12 executes various programs and controls the vehicle 100. Specifically, the CPU 12 reads out various programs stored in the ROM 14 or the storage 18, and executes the programs using the RAM 16 as a work area. The CPU 12 then performs various arithmetic processes according to the programs to control the vehicle 100.

The ROM 14 stores various programs and various data. The RAM 16 serves as a work area for temporarily storing programs or data. The storage 18 is configured as a memory medium such as a hard disk drive (HDD), a solid state drive (SSD), or a flash memory. The storage 18 stores various programs including an operating system, and various types of information used to control the vehicle 100.

The ROM 14 stores a control program 20. The control program 20 may be stored in the storage 18. The CPU 12 reads the control program 20 and executes the control program 20 using the RAM 16 as a work area. The CPU 12 then executes a control process for controlling the vehicle 100 in accordance with the control program 20. The control process is executed by the CPU 12 operating as an acquisition unit 30, a calculation unit 50, an estimation unit 60, a determination unit 70, and an instruction unit 90 in accordance with the control program 20.

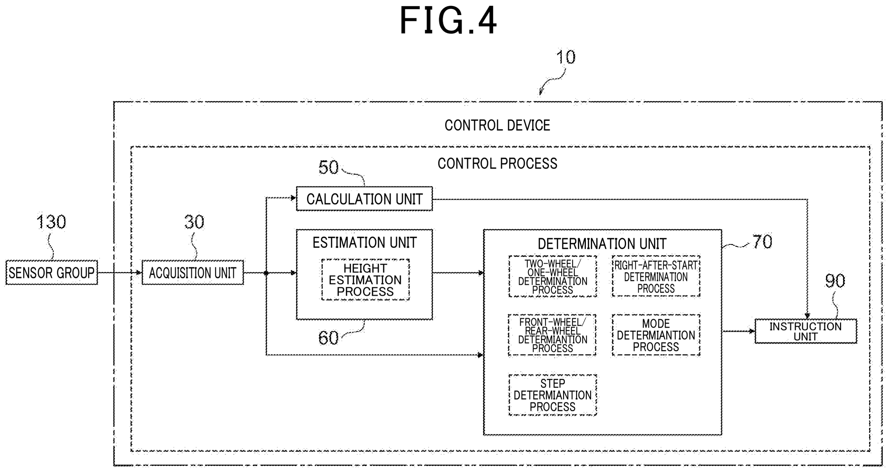

As illustrated in Fig. 4, the acquisition unit 30 acquires various physical quantities detected by the sensors based on signals from the sensor group 130. The calculation unit 50 performs calculation processing based on the various physical quantities acquired by the acquisition unit 30 to generate calculated values. The estimation unit 60 performs estimation processing based on the various physical quantities acquired by the acquisition unit 30 to generate estimated values. The estimation processing performed by the estimation unit 60 includes a height estimation process. The height estimation process will be described later.

The determination unit 70 performs determination processing based on the various physical quantities acquired by the acquisition unit 30 and the estimated values estimated by the estimation unit 60, to generate a determination result. The determination processing performed by the determination unit 70 includes a two-wheel/one-wheel determination process, a front-wheel/rear-wheel determination process, a step determination process, a right-after-start determination process, and a mode determination process. Each determination process will be described later. The instruction unit 90 controls the vehicle 100 based on the calculated value calculated by the calculation unit 50 and the determination result determined by the determination unit 70. Specifically, the instruction unit 90 outputs an instruction to the inverter and the brake ECU 112.

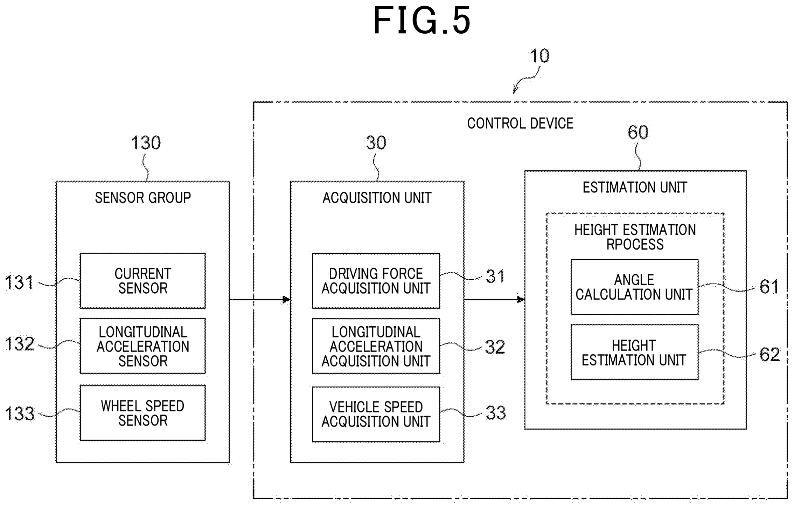

Next, the height estimation process and its related configuration will be described with reference to Fig. 5. The height estimation process is a process for estimating the step height H.

The sensor group 130 includes a current sensor 131, a longitudinal acceleration sensor 132, and a wheel speed sensor 133. The current sensor 131 is a sensor for detecting the value of the driving current flowing through the rotating electric machine 106. The longitudinal acceleration sensor 132 is a sensor for detecting longitudinal acceleration that is acceleration along the longitudinal direction of the vehicle 100. The wheel speed sensor 133 is a sensor for detecting the rotation speed of the wheel 104 as the wheel speed. Although the wheel speed sensor 133 is provided individually for the four wheels 104, Fig. 5 schematically illustrates the wheel speed sensor 133 in a single block.

The acquisition unit 30 includes a driving force acquisition unit 31, a longitudinal acceleration acquisition unit 32, and a vehicle speed acquisition unit 33. The driving force acquisition unit 31 acquires the value of the driving current based on the signal from the current sensor 131, and acquires the driving force by calculating the driving force that the vehicle 100 is applying to the road surface based on the value of the driving current. The longitudinal acceleration acquisition unit 32 acquires the longitudinal acceleration based on the signal from the longitudinal acceleration sensor 132. The vehicle speed acquisition unit 33 acquires the rotation speeds of the wheels 104 based on signals from the wheel speed sensors 133, and acquires the vehicle speed by calculating the traveling speed of the vehicle 100 in the longitudinal direction (hereinafter, referred to as "vehicle speed") based on the rotation speeds of the wheels 104.

The estimation unit 60 includes an angle calculation unit 61 and a height estimation unit 62. The angle calculation unit 61 executes an angle calculation process to calculate the trajectory angle $\theta$ (see Fig. 2) based on the driving force, the longitudinal acceleration, and the vehicle speed.

The trajectory angle $\theta$ will be described with reference to Fig. 2. The trajectory angle $\theta$ is the angle formed by the trajectory of a rotation center axis AX of the wheel 104 of the vehicle 100 with respect to the road surface. A trajectory angle $\theta 1$ is the trajectory angle in a case where the wheel 104 is assumed to be an ideal disk (that is, a rigid disk). The trajectory angle $\theta$ is smaller than the trajectory angle $\theta 1$ because the wheel 104 has a tire, and the tire becomes deformed when the wheel 104 climbs over the step 200.

The description will continue returning to Fig. 5. In the angle calculation process, the angle calculation unit 61 calculates a vertical load $F_z$ using Equation (1) below. The vertical load $F_z$ is a force applied to the wheel 104 in a downward direction, for example. The vertical load $F_z$ is calculated as the sum of the forces acting on the two wheels.

[Math. 1]

$$F_z = mg\left(\frac{l_r}{l} - \frac{G_x h}{l}\right) + d_s V_s \tan\theta o\,ld \quad (1)$$

In Equation (1), "m" in the first term on the right side is the weight of the vehicle 100, "g" is the acceleration of gravity, "1" is the wheelbase length of the vehicle 100, "lr" is the length in the longitudinal direction from the barycenter of the vehicle 100 to the rotation center axis AX of the rear wheel. In addition, "$G_x$" is the longitudinal acceleration acquired by the longitudinal acceleration acquisition unit 32, and "h" is the height from the road surface to the barycenter of the vehicle 100 (hereinafter, referred to as "barycenter height"). The first term on the right side of Equation (1) represents the components of the downward force applied to each wheel 104 as a dynamic load during traveling of the vehicle 100.

In Equation (1), "$d_s$" in the second term on the right side is the damping coefficient of a damper (not illustrated) provided in the vehicle 100. Also, "$V_s$" is the vehicle speed acquired by the vehicle speed acquisition unit 33, and "$\theta_{old}$" is the value of the trajectory angle $\theta$ calculated in the previous control process. When the angle calculation process is executed for the first time, 0 is used as the value of "$\theta_{old}$", for example. The second term on the right side of Equation (1) represents the force applied to each wheel 104 along with expansion or contraction of the damper.

After calculating the vertical load $F_z$, the angle calculation unit 61 calculates the trajectory angle $\theta$ using Equation (2) below.

[Math. 2]

$$\theta = \mathrm{asin}\left(\frac{mg \times G_x - F_{mg}\cos\theta_{old}}{F_z}\right) \quad (2)$$

In Equation (2), "$F_{mg}$" on the right side is the driving force acquired by the driving force acquisition unit 31, that is, the driving force that is applied by the driving wheels of the vehicle 100 to the road surface.

As described above, the angle calculation unit 61 calculates the trajectory angle $\theta$ at the current position of the vehicle 100, based on the driving force acquired by the driving force acquisition unit 31, the longitudinal acceleration acquired by the longitudinal acceleration acquisition unit 32, and the vehicle speed acquired by the vehicle speed acquisition unit 33.

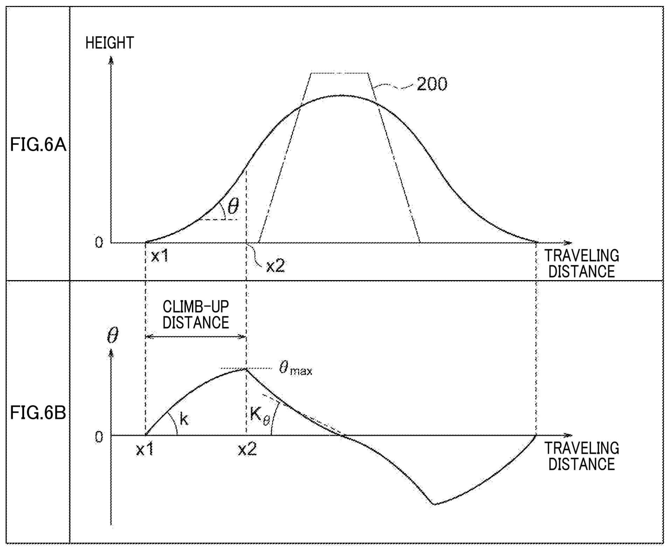

The graph illustrated by the solid line in Fig. 6A represents the relationship between the distance traveled by the vehicle 100 (horizontal axis) and the height of the rotation center axis AX of the wheel 104 (vertical axis) in a case where the vehicle 100 moves toward the step 200. The height of the rotation center axis AX of the wheel 104 is expressed as the variation in the height direction of the rotation center axis AX. The graph can be said to represent the trajectory of the rotation center axis AX during traveling of the vehicle 100. In Fig. 6A, 0 indicates the trajectory angle $\theta$ with the vehicle 100 at a position x1. The trajectory angle $\theta$ can be defined in correspondence with each position of the vehicle 100.

The graph illustrated by the solid line in Fig. 6B represents the relationship between the distance traveled by the vehicle 100 (horizontal axis) and the trajectory angle $\theta$ (vertical axis) in a case where the vehicle 100 moves toward the step 200. The trajectory angle $\theta$ reaches a maximum value $\theta_{max}$ when the position of the vehicle 100 moves from x1 to x2. The position x2 corresponds to the peak of the trajectory angle $\theta$ (that is, the point of maximum load) when the wheel 104 is about to climb over the step 200 before reaching the top of the step 200. The distance from the position x1 to the position x2 can be called climb-up distance. The "rate of change $\kappa$ of the trajectory angle $\theta$" and the "downward gradient $K_\theta$ of the trajectory angle $\theta$" shown in FIG. 6B will be described later.

As described above, the "trajectory angle $\theta$" refers to the angle formed by the trajectory of the rotation center axis AX of the wheel 104 and the like with respect to the road surface. However, the "trajectory of the rotation center axis AX" here refers to the trajectory of the rotation center axis AX when the vehicle 100 is viewed along its lateral direction. The trajectory of the rotation center axis AX reflects the shape of the step 200 indicated by the dot-dashed line in Fig. 6A. The trajectory of the rotation center axis AX and the shape of the step 200 are different from each other because the tire becomes deformed when the wheel 104 climbs over the step 200.

The description will continue returning to Fig. 5. The height estimation unit 62 estimates the step height H that is the height of the step 200, based on the trajectory angle $\theta$. Specifically, the height estimation unit 62 estimates, as the step height H, a first step height H1, a second step height H2, and a third step height H3.

For example, the height estimation unit 62 estimates the first step height H1 as the step height H, based on the maximum value $\theta_{max}$ of the trajectory angle $\theta$, the ground contact length L of the wheel 104, and a dynamic radius R of the wheel 104. The height estimation unit 62 also estimates the second step height H2 as the step height H, based on the rate of change $\kappa$ of the trajectory angle $\theta$, the ground contact length L of the wheel 104, and the dynamic radius R of the wheel 104. The height estimation unit 62 also estimates the third step height H3 as the step height H, based on the maximum value $\theta_{max}$ of the trajectory angle $\theta$, the downward gradient $K_\theta$ of the trajectory angle $\theta$, and the ground contact length L of the wheel 104. The method for calculating the first step height H1, the second step height H2, and the third step height H3 will be described later.

After estimating the first step height H1, the second step height H2, and the third step height H3, the height estimation unit 62 executes a first selection process and a second selection process. In the first selection process, the height estimation unit 62 selects the maximum value between the first step height H1 and the second step height H2 as the step height H. On the other hand, in the second selection process, the height estimation unit 62 selects the maximum value among the first step height H1, the second step height H2, and the third step height H3 as the step height H.

Next, a method for calculating the first step height H1 will be described. Under this calculation method, the first step height H1 is estimated from the maximum value $\theta_{max}$ of the trajectory angle $\theta$ when the vehicle 100 climbs over the step 200. If the wheel 104 is assumed to be an ideal disk, the trajectory angle $\theta1$ is calculated using the trajectory angle $\theta$ by Equation (3) below.

[Math. 3]

$$\theta 1 = \frac{\pi}{2} + \theta - \mathrm{acos}\left(\frac{L}{2R}\right) \quad (3)$$

If the wheel 104 is assumed to be an ideal disk, the step height H is calculated using the trajectory angle $\theta 1$ by Equation (4) below. Then, from Equations (3) and (4), the first step height H1 is calculated by Equation (5) below.
[Math. 4]

$$H = R - R\cos\theta 1 \quad (4)$$

[Math. 5]

$$H1 = R(1 - \sin(\mathrm{acos}\left(\frac{L}{2R}\right) - \theta m_{ax}) \quad (5)$$

In this way, under the method for calculating the first step height H1, the first step height H1 is estimated from the maximum value $\theta_{max}$ of the trajectory angle $\theta$ when the vehicle 100 climbs over the step 200, so that the estimation accuracy of the first step height H1 is high. However, since the first step height H1 (maximum height) is obtained at the maximum value $\theta_{max}$ (peak value) of the trajectory angle $\theta$, estimating the first step height H1 requires time from when the vehicle 100 starts to climb over the step 200 to when the trajectory angle $\theta$ reaches the maximum value $\theta_{max}$.
Next, a method for calculating the second step height H2 will be described. Under this calculation method, the second step height H2 is estimated from the rate of change $\kappa$ of the trajectory angle $\theta$. The maximum value $\theta_{max}$ of the trajectory angle $\theta$ is expressed by Equation (6) below, and the rate of change $\kappa$ of the trajectory angle $\theta$ is expressed by Equation (7) below.
[Math. 6]

$$\theta_{max} = K \times L \quad (6)$$

[Math. 7]

$$K = \frac{d\theta}{dx} = fitler\left(\frac{\frac{d\theta}{dt}}{\frac{dx}{dt}}\right) = filter\left(\frac{\dot{\theta}}{v_x}, 2H_z\right) \quad (7)$$

Then, from Equations (6) and (7), the second step height H2 is calculated by Equation (8) below.
[Math. 8]

$$H2 = R(1 - \sin(\mathrm{acos}\left(\frac{L}{2R}\right) - filter\left(\frac{\dot{\theta}}{v_x}, 2H_z\right) \times L) \quad (8)$$

In this way, under the method for calculating the second step height H2, the second step height H2 is estimated from the rate of change $\kappa$ of the trajectory angle $\theta$, so that it is possible to quickly detect that the wheel 104 has come into contact with the step 200 before the trajectory angle $\theta$ reaches the maximum value $\theta_{max}$.
Next, a method for calculating the third step height H3 will be described. For example, if the vehicle 100 climbs over the step 200 obliquely in a plan view, the trajectory angle $\theta$ is smaller than that in the case where the vehicle 100 climbs over the step 200 vertically, and therefore the step height H will be estimated to be lower.
Therefore, under this calculation method, the third step height H3 is estimated on the assumption that the vehicle 100 climbs over the step 200 obliquely in a plan view. That is, the third step height H3 is calculated by Equation (9) below using the downward gradient $K_\theta$ of the trajectory angle $\theta$. The downward gradient $K_\theta$ of the trajectory angle $\theta$ is calculated in the same manner as the rate of change $\kappa$ of the trajectory angle $\theta$.
[Math. 9]

$$H3 = \frac{1}{2} \times \left( L \times \theta_{max} + \frac{\theta_{max}^2}{k_\theta} \right) \quad (9)$$

Next, the two-wheel/one-wheel determination process will be described. The two-wheel/one-wheel determination process is a process for determining whether the two wheels have climbed up on the step 200 or whether one wheel has climbed up on the step 200. The two wheels here refer to the front wheels on both the left and right sides at the time of moving forward, and the rear wheels on both the left and right sides at the time of moving rearward. In the present embodiment, as the two-wheel/one-wheel determination process, two-wheel/one-wheel determination processes according to first to third examples are exemplified.

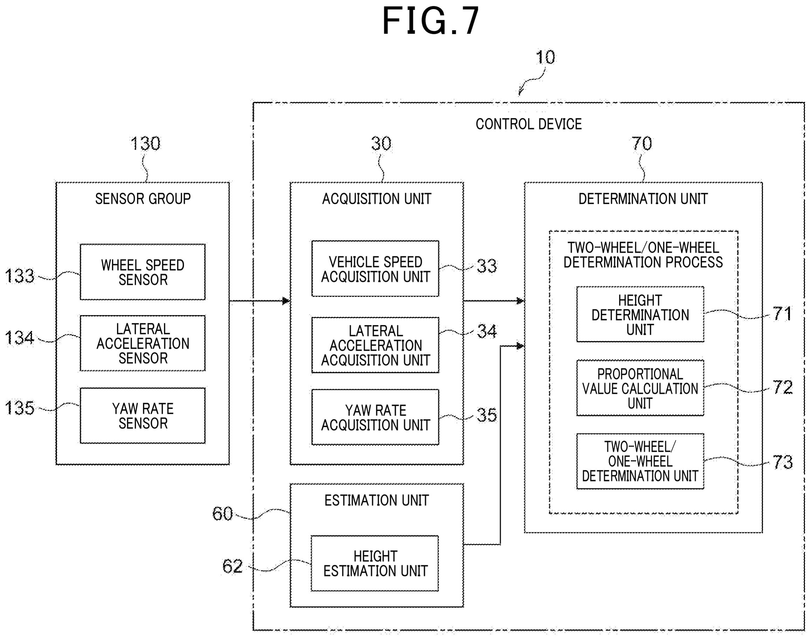

First, the two-wheel/one-wheel determination process according to the first example and the related configuration will be described with reference to Fig. 7.

The sensor group 130 includes a lateral acceleration sensor 134 and a yaw rate sensor 135 in addition to the wheel speed sensors 133 described above. The lateral acceleration sensor 134 is a sensor for detecting lateral acceleration that is acceleration along the lateral direction of the vehicle 100. The yaw rate sensor 135 is a sensor for detecting the yaw rate that is the rotational angular speed around a vertical axis passing through the barycenter of the vehicle 100.

The acquisition unit 30 includes a lateral acceleration acquisition unit 34 and a yaw rate acquisition unit 35 in addition to the vehicle speed acquisition unit 33 described above. The lateral acceleration acquisition unit 34 acquires the lateral acceleration based on a signal from the lateral acceleration sensor 134. The yaw rate acquisition unit 35 acquires the yaw rate based on a signal from the yaw rate sensor 135. In this case, the yaw rate is the actual yaw rate obtained directly based on the result of detection by the yaw rate sensor 135. The yaw rate acquisition unit 35 may acquire the wheel speeds of the two wheels based on signals from the wheel speed sensors 133, and calculate the yaw rate based on the acquired wheel speeds to acquire the yaw rate. In this case, the yaw rate is a yaw rate estimated from the results of detection by the wheel speed sensors 133, and is a wheel speed yaw rate corresponding to the wheel speeds.

The determination unit 70 includes a height determination unit 71, a proportional value calculation unit 72, and a two-wheel/one-wheel determination unit 73. The height determination unit 71 determines whether the step height H (for example, the first step height H1) estimated by the height estimation unit 62 is higher than a predetermined specified height. The specified height is set to a value (for example, 2 cm) that allows detection of the wheel 104 coming into contact with the step 200 before the wheel 104 climbs over the step 200. If the height determination unit 71 determines that the step height H is higher than the specified height, the proportional value calculation unit 72 calculates a lateral acceleration proportional value $\delta_G$ that is a value obtained by comparing the lateral acceleration with the yaw rate, based on the lateral acceleration and the yaw rate.

The lateral acceleration proportional value $\delta_G$ is calculated by Equation (10) below. Here, "Gy" is the lateral acceleration acquired by the lateral acceleration acquisition unit 34. "K" is a coefficient. "Vx" is the vehicle speed acquired by the vehicle speed acquisition unit 33, "r" is the yaw rate acquired by the yaw rate acquisition unit 35, and "const" is a zero division prevention coefficient. The zero division prevention coefficient const is a coefficient for preventing the denominator of Equation (10) from becoming 0 when Vx × r < 1, for example, and its value is 1, for example. The value of the zero division prevention coefficient const is set according to the level of noise in the wheel speed sensors 133, the lateral acceleration sensor 134, and the yaw rate sensor 135, for example.

[Math. 10]

$$\delta_G = \frac{G_y \times K}{\max(V_x \times r, const)} \quad (10)$$

The two-wheel/one-wheel determination unit 73 determines whether the two wheels have climbed up on the step 200 or one wheel has climbed up on the step 200 based on the lateral acceleration proportional value $\delta_G$. Specifically, the two-wheel/one-wheel determination unit 73 determines whether the absolute value of the lateral acceleration proportional value $\delta_G$ is less than or equal to a predetermined threshold value. The threshold value for the lateral acceleration proportional value $\delta_G$ is set to the maximum value of the lateral acceleration proportional value $\delta_G$ obtained when the two wheels have climbed up on the step 200.

If the absolute value of the lateral acceleration proportional value $\delta_G$ is less than or equal to the threshold value, the two-wheel/one-wheel determination unit 73 determines that the two wheels have climbed up on the step 200. If the absolute value of the lateral acceleration proportional value $\delta_G$ is greater than the threshold value, the two-wheel/one-wheel determination unit 73 determines that one wheel has climbed up on the step 200.

In this way, in the two-wheel/one-wheel determination process according to the first example, when one wheel has climbed up on the step 200, the vehicle 100 inclines to the left or right compared to when the two wheels have climbed up on the step 200, and therefore, the inclination of the vehicle 100 is detected as lateral acceleration. In order to cancel the lateral acceleration that would occur during cornering of the vehicle 100, the lateral acceleration proportional value $\delta_G$ that is a value obtained by comparing the lateral acceleration with the yaw rate, is calculated as described above, and determination is made using the lateral acceleration proportional value $\delta_G$ at which the inclination of the vehicle 100 appears.

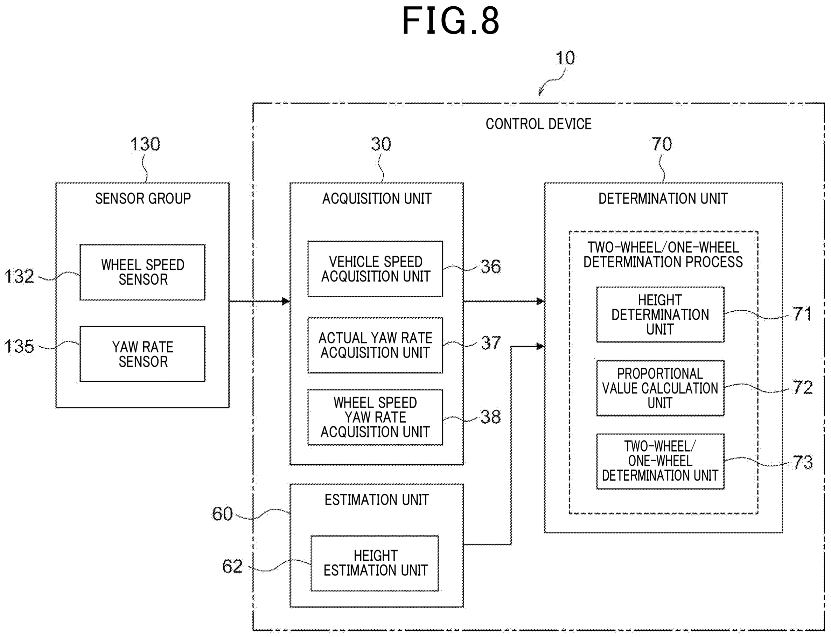

Next, the two-wheel/one-wheel determination process according to the second example and the related configuration will be described with reference to Fig. 8.

A sensor group 130 includes a wheel speed sensors 133 and a yaw rate sensor 135 as described above. An acquisition unit 30 includes a wheel speed acquisition unit 36, an actual yaw rate acquisition unit 37, and a wheel speed yaw rate acquisition unit 38. The wheel speed acquisition unit 36 acquires the wheel speeds of the two wheels based on signals from the wheel speed sensors 133. The actual yaw rate acquisition unit 37 acquires the actual yaw rate based on a signal from the yaw rate sensor 135. The wheel speed yaw rate acquisition unit 38 acquires the wheel speeds of the two wheels based on signals from the wheel speed sensors 133, and calculates the wheel speed yaw rate based on the acquired wheel speeds, thereby acquiring the wheel speed yaw rate.

A determination unit 70 includes a height determination unit 71, a proportional value calculation unit 72, and a two-wheel/one-wheel determination unit 73, as described above. As in the two-wheel/one-wheel determination process according to the first example, the height determination unit 71 determines whether a step height H (for example, a first step height H1) estimated by a height estimation unit 62 is higher than a specified height. If the height determination unit 71 determines that the step height H is higher than the specified height, the proportional value calculation unit 72 calculates a yaw rate proportional value $\delta_r$ that is a value obtained by comparing the wheel speed yaw rate with the actual yaw rate, based on the actual yaw rate and the wheel speed yaw rate.

The yaw rate proportional value $\delta_r$ is calculated by Equations (11) and (12) below. Here, "$r_{wheel}$" is the wheel speed yaw rate acquired by the wheel speed yaw rate acquisition unit 38, "r" is the yaw rate acquired by the actual yaw rate acquisition unit 37 (that is, the actual yaw rate), and "const" is a zero division prevention coefficient. The zero division prevention coefficient const is a coefficient for preventing the denominator of Equation (11) from becoming 0, and its value is 1, for example. The value of the zero division prevention coefficient const is set according to the level of noise in the wheel speed sensors 133 and the yaw rate sensor 135, for example.

"$V_L$" is the wheel speed of the left wheel 104 acquired by the wheel speed acquisition unit 36. "$V_R$" is the wheel speed of the right wheel 104 acquired by the wheel speed acquisition unit 36. "$V_{wheel}$" is the average value of the wheel speeds of the two wheels calculated by the wheel speed yaw rate acquisition unit 38. "$L_{flg}$" is "1" when "$V_L > 0.8$ km/h", and is "0" otherwise. "$R_{flg}$" is "1" when "$V_R > 0.8$ km/h", and is "0" otherwise, and "tr" is the tread of the two wheels.

[Math. 11]

$$\delta_r = \frac{r_{wheel}}{max(r, const)} \quad (11)$$

[Math. 12]

$$r_{wheel} = ((LPF(V_L, 4Hz) - V_{wheel}) \times L_{flg} - (LPF(V_R, 4Hz) - V_{wheel}) \times R_{flg}) \times 2/(tr \times max(1, L_{flg} + R_{flg})) \quad (12)$$

The two-wheel/one-wheel determination unit 73 determines whether the two wheels have climbed up on the step 200 or one wheel has climbed up on the step 200 based on the yaw rate proportional value $\delta_r$. Specifically, the two-wheel/one-wheel determination unit 73 determines whether the absolute value of the yaw rate proportional value $\delta_r$ is less than or equal to a predetermined threshold value. The threshold value for the yaw rate proportional value $\delta_r$ is set to the maximum value of the yaw rate proportional value $\delta_r$ obtained when the two wheels have climbed up on the step 200.

If the absolute value of the yaw rate proportional value $\delta_r$ is less than or equal to the threshold value, the two-wheel/one-wheel determination unit 73 determines that the two wheels have climbed up on the step 200. If the absolute value of the yaw rate proportional value $\delta_r$ is greater than the threshold value, the two-wheel/one-wheel determination unit 73 determines that one wheel has climbed up on the step 200.

In this way, in the two-wheel/one-wheel determination process according to the second example, when one wheel has climbed up on the step 200, the vehicle 100 inclines to the left or right compared to when the two wheels have climbed up on the step 200, and therefore, the inclination of the vehicle 100 is detected as yaw rate. In order to cancel the yaw rate that would occur during cornering of the vehicle 100, the yaw rate proportional value $\delta_r$ that is a value obtained by comparing the wheel speed yaw rate with the actual yaw rate, is calculated as described above, and determination is made using the yaw rate proportional value $\delta_r$ due to factors other than cornering.

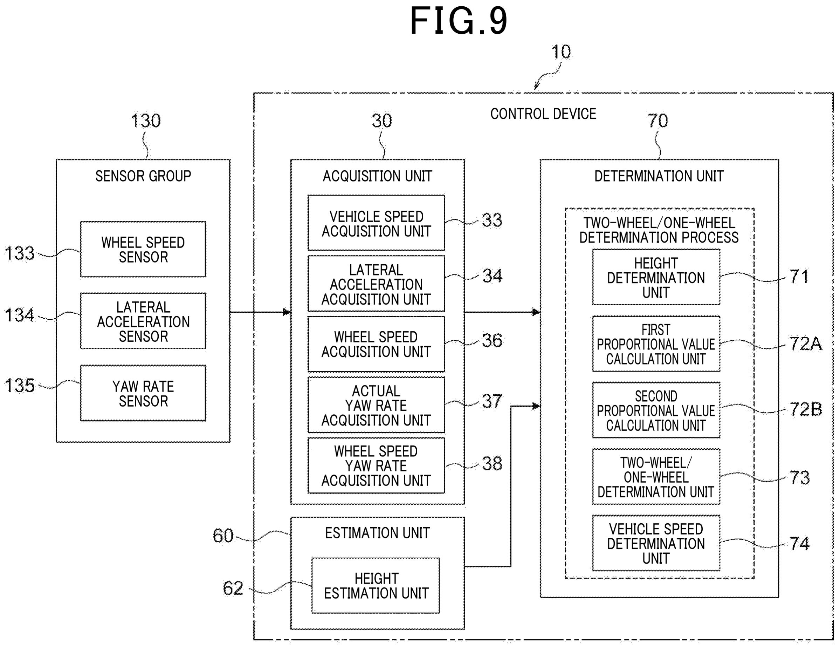

Next, the two-wheel/one-wheel determination process according to the third example and the related configuration will be described with reference to Fig. 9.

As described above, a sensor group 130 includes wheel speed sensors 133, a lateral acceleration sensor 134, and a yaw rate sensor 135. As described above, an acquisition unit 30 includes a vehicle speed acquisition unit 33, a lateral acceleration acquisition unit 34, a wheel speed acquisition unit 36, an actual yaw rate acquisition unit 37, and a wheel speed yaw rate acquisition unit 38.

A determination unit 70 includes a vehicle speed determination unit 74 in addition to a height determination unit 71 and a two-wheel/one-wheel determination unit 73 described above. The determination unit 70 also has a first proportional value calculation unit 72A and a second proportional value calculation unit 72B instead of the proportional value calculation unit 72 described above. The vehicle speed determination unit 74 determines whether the vehicle speed is less than or equal to a predetermined threshold speed. The threshold speed is set to the maximum value of the extremely low speed range (for example, 1 km/h).

As does the proportional value calculation unit 72 in the two-wheel/one-wheel determination process according to the first example described above, if the height determination unit 71 determines that the step height H is higher than the specified height, the first proportional value calculation unit 72A calculates a lateral acceleration proportional value $\delta_G$ that is a value obtained by comparing the lateral acceleration with the yaw rate, based on the lateral acceleration and the yaw rate. As does the proportional value calculation unit 72 in the two-wheel/one-wheel determination process according to the second example described above, if the height determination unit 71 determines that the step height H is greater than the specified height, the second proportional value calculation unit 72B calculates a yaw rate proportional value $\delta_r$ that is a value obtained by comparing the wheel speed yaw rate with the actual yaw rate, based on the actual yaw rate and the wheel speed yaw rate.

If the vehicle speed determination unit 74 determines that the vehicle speed is less than or equal to the threshold speed, the two-wheel/one-wheel determination unit 73 performs two-wheel/one-wheel determination to determine whether the two wheels have climbed up on the step 200 or one wheel has climbed up on the step 200, based on the lateral acceleration proportional value $\delta_G$. On the other hand, if the vehicle speed determination unit 74 determines that the vehicle speed is not less than or equal to the threshold speed (that is, the vehicle speed exceeds the threshold speed), the two-wheel/one-wheel determination unit 73 performs the two-wheel/one-wheel determination based on the yaw rate proportional value $\delta_r$.

As described above, in the two-wheel/one-wheel determination process according to the third example, taking into consideration that calculating the yaw rate proportional value $\delta_r$ is more accurate at vehicle speeds higher than at extremely low speeds but the wheel speed sensors 133 cannot detect the wheel speeds in the extremely low speed range, the two-wheel/one-wheel determination is performed based on the lateral acceleration proportional value $\delta_g$ if the vehicle speed is less than or equal to the threshold speed, and is performed based on the yaw rate proportional value $\delta_r$ if the vehicle speed exceeds the threshold speed.

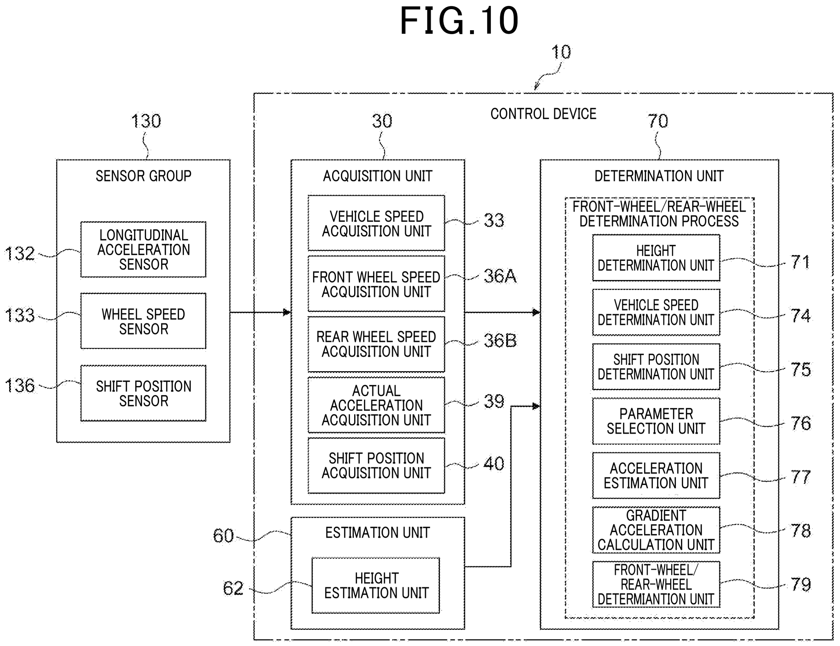

Next, the front-wheel/rear-wheel determination process and its related configuration will be described with reference to Fig. 10. The front-wheel/rear-wheel determination process is a process for determining whether the front wheel has climbed up on the step 200 or the rear wheel has climbed up on the step 200.

The sensor group 130 includes a shift position sensor 136 in addition to the longitudinal acceleration sensor 132 and wheel speed sensors 133 described above. The shift position sensor 136 is a sensor for detecting the position of the shift provided in a vehicle 100.

The acquisition unit 30 includes a front wheel speed acquisition unit 36A, a rear wheel speed acquisition unit 36B, an actual acceleration acquisition unit 39, and a shift position acquisition unit 40 in addition to the vehicle speed acquisition unit 33 described above. The front wheel speed acquisition unit 36A acquires the wheel speed of the front wheel based on a signal from the wheel speed sensor 133 corresponding to the front wheel. The rear wheel speed acquisition unit 36B acquires the wheel speed of the rear wheel based on a signal from the wheel speed sensor 133 corresponding to the rear wheel. The actual acceleration acquisition unit 39 acquires the actual acceleration along the longitudinal direction of the vehicle 100 (that is, the longitudinal acceleration) based on a signal from the longitudinal acceleration sensor 132. The shift position acquisition unit 40 acquires the position of the shift based on a signal from the shift position sensor 136.

The determination unit 70 also has a shift position determination unit 75, a parameter selection unit 76, an acceleration estimation unit 77, a gradient acceleration calculation unit 78, and a front-wheel/rear-wheel determination unit 79 in addition to the height determination unit 71 and vehicle speed determination unit 74 described above.

The shift position determination unit 75 determines the position of the shift. If the shift position determination unit 75 determines that the position of the shift is a position for forward traveling (for example, position D, position B, or position S), the parameter selection unit 76 selects parameters for forward traveling. On the other hand, if the shift position determination unit 75 determines that the position of the shift is a position for rearward traveling (that is, position R), the parameter selection unit 76 selects parameters for rearward traveling.

For example, when the wheel 104 contacts the step 200, the load transfer is reversed between forward traveling and rearward traveling, so the longitudinal acceleration toward the front is set to a positive value during forward traveling, and the longitudinal acceleration toward the back is set to a positive value during rearward traveling. In addition, since the front wheel damper and the rear wheel damper have different damping coefficients, a correction parameter for the forward traveling damper component is used during forward traveling, and a correction parameter for the rearward traveling damper component is used during rearward traveling. Further, the wheel speed used in the two-wheel/one-wheel determination process is the front wheel speed during forward traveling, and the wheel speed used in the two-wheel/-one-wheel determination process is the rear wheel speed during rearward traveling.

The height determination unit 71 determines whether the step height H estimated by a height estimation unit 62 (for example, the maximum value between a first step height H1 and a second step height H2) is greater than a predetermined specified height (for example, 10 mm). If the height determination unit 71 determines that the step height H is greater than the specified height, the vehicle speed determination unit 74 determines whether the vehicle speed is less than or equal to a predetermined threshold speed (for example, 1 km/h).

If the vehicle speed determination unit 74 determines that the vehicle speed is less than or equal to the threshold speed, the acceleration estimation unit 77 estimates the estimated acceleration along the traveling direction of the vehicle 100 based on the front wheel speed or the rear wheel speed. The gradient acceleration calculation unit 78 calculates the gradient acceleration that is the difference between the actual acceleration and the estimated acceleration.

If the vehicle speed determination unit 74 determines that the vehicle speed is less than or equal to the threshold speed, the front-wheel/rear-wheel determination unit 79 performs front-wheel/rear-wheel determination to determine whether the front wheel has climbed up on the step 200 or the rear wheel has climbed up on the step 200, based on an estimated step height $H_{slope}$ estimated from the gradient acceleration and the step height H.

Specifically, the front-wheel/rear-wheel determination unit 79 determines whether the estimated step height $H_{slope}$ is smaller than the step height H. If the estimated step height $H_{slope}$ is smaller than the step height H, the front-wheel/rear-wheel determination unit 79 determines that the rear wheel has climbed up on the step 200. On the other hand, if the estimated step height $H_{slope}$ is greater than or equal to the step height H, the front-wheel/rear-wheel determination unit 79 determines that the front wheel has climbed up on the step 200.

The estimated step height $H_{slope}$ is calculated by Equation (13) below. "$G_x$" is the actual acceleration (that is, longitudinal acceleration) acquired by the actual acceleration acquisition unit 39. "$G_{xvspd}$" is the estimated acceleration estimated by the acceleration estimation unit 77.

[Math. 13]

$$H_{slope} = \left(G_x - G_{xvspd}\right) \times l \quad (13)$$

When the front wheel of the vehicle 100 climbs up onto the step 200 during forward traveling, the vehicle 100 takes a nose-up, and when the rear wheel climbs up onto the step 200, the vehicle 100 takes a nose-dive. In the vehicle 100, the longitudinal acceleration sensor 132 is on an equivalent spring, so that the gradient acceleration is an upward gradient at the time of a nose-up, and is a downward gradient at the time of a nose-dive. Therefore, as described above, comparing the estimated step height $H_{slope}$ estimated from the gradient acceleration with the step height H makes it possible to determine whether the front wheel has climbed up on the step 200 or the rear wheel has climbed up on the step 200.

On the other hand, if the vehicle speed determination unit 74 determines that the vehicle speed is not less than or equal to the threshold speed (that is, the vehicle speed exceeds the threshold speed), the front-wheel/rear-wheel determination unit 79 performs front-wheel/rear-wheel determination based on the front wheel speed and the rear wheel speed.

Specifically, the front-wheel/rear-wheel determination unit 79 determines whether the front wheel has decelerated before the rear wheel or whether the rear wheel has decelerated before the front wheel, based on the front wheel speed and the rear wheel speed. If the front-wheel/rear-wheel determination unit 79 determines that the front wheel has decelerated before the rear wheel, the front-wheel/rear-wheel determination unit 79 determines that the front wheel has climbed up on the step 200. On the other hand, if the front-wheel/rear-wheel determination unit 79 determines that the rear wheel has decelerated before the front wheel, it determines that the rear wheel has climbed up on the step 200.

For example, if the front wheel climbs up onto the step 200 during forward traveling, the front wheel decelerates due to the first contact with the step 200 while the rear wheel continues to rotate due to inertia. After that, after the front tire or suspension and the like is deformed, deceleration is transferred from the front wheel to the vehicle body 102, and the rear wheel starts to decelerate. Therefore, if the front wheel decelerates before the rear wheel, it can be determined that the front wheel has contacted the step 200. On the other hand, if the rear wheel climbs up onto the step 200, the rear wheel decelerates first, and then the front wheel starts to decelerate. Therefore, if the rear wheel decelerates before the front wheel, it can be determined that the rear wheel has contacted the step 200.

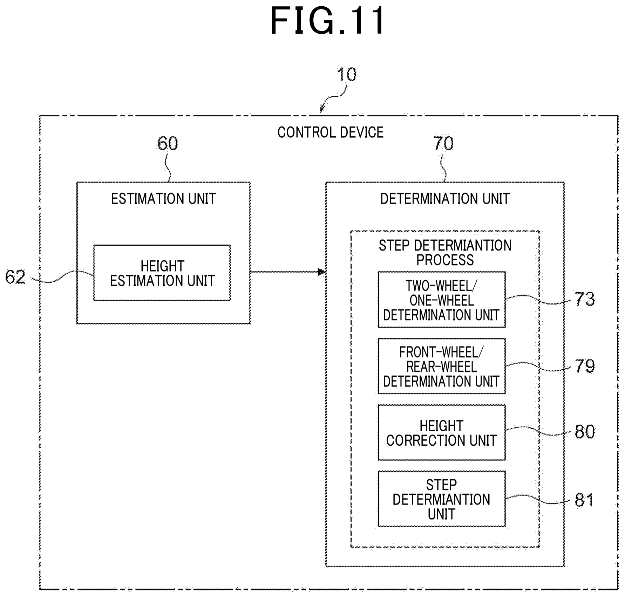

Next, the step determination process and its related configuration will be described with reference to Fig. 11. The step determination process is a process for, if the wheel 104 comes into contact with the step 200, determining whether the step 200 corresponds to a step to be climbed over.

The determination unit 70 has a height correction unit 80 and a step determination unit 81 in addition to the above-mentioned two-wheel/one-wheel determination unit 73 and front-wheel/rear-wheel determination unit 79.

The height correction unit 80 corrects the step height H based on the result of determination by the two-wheel/one-wheel determination unit 73. Specifically, if the first selection process is executed by the height estimation unit 62, the height correction unit 80 corrects the step height H selected in the first selection process based on the result of determination by the two-wheel/one-wheel determination unit 73.

For example, if the two-wheel/one-wheel determination unit 73 determines that one wheel has climbed up on the step 200, the height correction unit 80 performs a correction to double the step height H selected in the first selection process. On the other hand, if the two-wheel/one-wheel determination unit 73 determines that the two wheels have climbed up on the step 200, the height correction unit 80 uses the step height H selected in the first selection process as it is.

In addition, if the second selection process is executed by the height estimation unit 62, the height correction unit 80 corrects the step height H selected in the second selection process based on the result of determination by the two-wheel/one-wheel determination unit 73.

For example, if the two-wheel/one-wheel determination unit 73 determines that one wheel has climbed up on the step 200, the height correction unit 80 performs a correction to double the step height H selected in the second selection process. On the other hand, if the two-wheel/one-wheel determination unit 73 determines that the two wheels have climbed up on the step 200, the height correction unit 80 uses the step height H selected in the second selection process as it is.

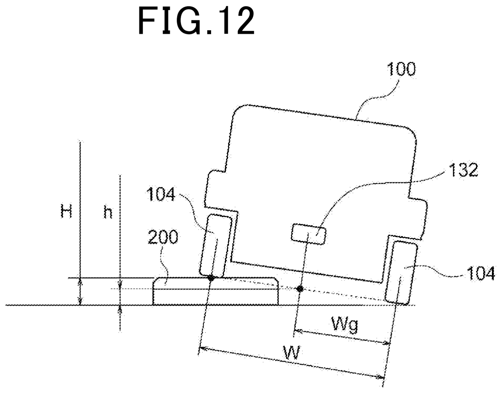

Here, the reason why the step height H is doubled if the two-wheel/one-wheel determination unit 73 determines that one wheel has climbed up on the step 200 will be described with reference to Fig. 12.

If it is determined that one wheel has climbed up on the step 200, the vehicle 100 will incline and the height of the step 200 estimated at the barycenter position where the longitudinal acceleration sensor 132 is provided (that is, a barycenter height h) will be less than the actual step height H. Here, "Wg" is the width from the wheel 104 to the barycenter, and "W" is the width between the two wheels. The width Wg is half the width W. Therefore, when it is determined that one wheel has climbed up on the step 200, the barycenter height h becomes half of the actual step height H. The step height H estimated by the height estimation unit 62 described above corresponds to the barycenter height h, so if it is determined that one wheel has climbed up on the step 200, the step height H needs to be doubled.

The description will continue returning to Fig. 11. The height correction unit 80 corrects the step height H based on the result of determination by the front-wheel/rear-wheel determination unit 79. Specifically, while the vehicle 100 is traveling forward, if the front-wheel/rear-wheel determination unit 79 determines that the front wheel has climbed up on the step 200, the height correction unit 80 performs a height determination to determine whether the step height H selected in the second selection process in the current control process (hereinafter, referred to as "current step height H") is greater than the step height H selected in the second selection process in the previous control process (hereinafter, referred to as "previous step height H"). If the front-wheel/rear-wheel determination unit 79 determines that the rear wheel has climbed up on the step 200, the height correction unit 80 cancels the height determination.

Furthermore, if the vehicle 100 is traveling rearward, if it is determined by the front-wheel/rear-wheel determination that the rear wheel has climbed up on the step 200, the height correction unit 80 executes the height determination. If the front-wheel/rear-wheel determination unit 79 determines that the front wheel has climbed up on the step 200, the height correction unit 80 cancels the height determination.

If the height correction unit 80 determines that the current step height H is greater than the previous step height H, the height correction unit 80 adopts the current step height H as the step height H. On the other hand, if the height correction unit 80 determines that the current step height H is not greater than the previous step height H (that is, the current step height H is less than the previous step height H), the height correction unit 80 uses the previous step height H as the step height H.

If the first selection process is executed by the height estimation unit 62, the step determination unit 81 determines whether the vehicle 100 should climb over the step 200 based on the step height H corrected by the height correction unit 80 and the result of determination by the front-wheel/rear-wheel determination unit 79.

Specifically, if the vehicle 100 is traveling forward and the front-wheel/rear-wheel determination unit 79 determines that the front wheel has climbed up on the step 200, the step determination unit 81 executes a climb-over determination to determine whether the vehicle 100 should climb over the step 200. If the front-wheel/rear-wheel determination unit 79 determines that the rear wheel has climbed up on the step 200, the step determination unit 81 cancels the climb-over determination.

Furthermore, if the vehicle 100 is traveling rearward, if it is determined by the front-wheel/rear-wheel determination that the rear wheel has climbed up on the step 200, the step determination unit 81 executes the climb-over determination. If the front-wheel/rear-wheel determination unit 79 determines that the front wheel has climbed up on the step 200, the step determination unit 81 cancels the climb-over determination.

In the climb-over determination, the step determination unit 81 determines whether the step height H is greater than a predetermined threshold height. The threshold height can be set arbitrarily. For example, the threshold height is set to 50 mm. If the step determination unit 81 determines that the step height H is not greater than the threshold height (that is, the step height H is less than or equal to the threshold height), the step determination unit 81 determines that the step should be climbed over. On the other hand, if the step determination unit 81 determines that the step height H is greater than the threshold height, the step determination unit 81 determines that the step should not be climbed over.

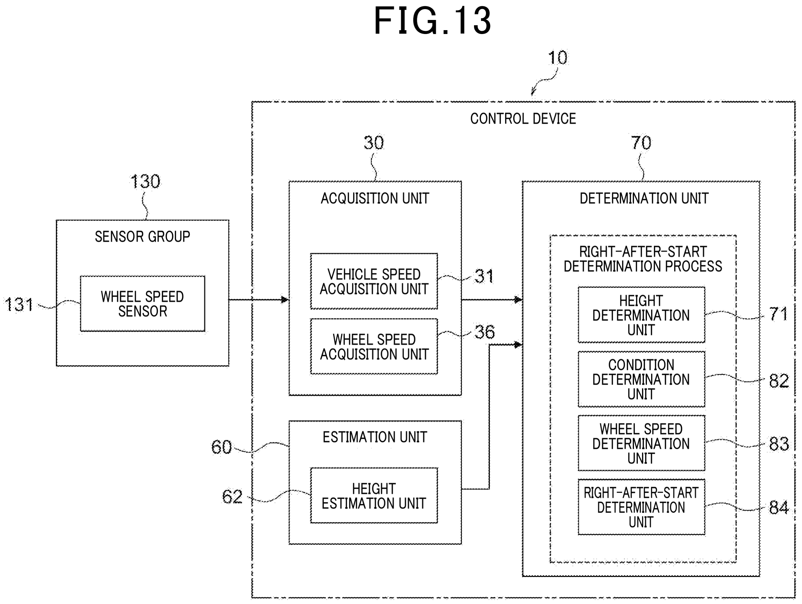

Next, the right-after-start determination process and its related configuration will be described with reference to Fig. 13. The right-after-start determination process is a process for determining whether the vehicle 100 has just started moving.

The sensor group 130 includes the wheel speed sensors 133 as described above. The acquisition unit 30 includes the vehicle speed acquisition unit 33 and the wheel speed acquisition unit 36 as described above.

The determination unit 70 includes a condition determination unit 82, a wheel speed determination unit 83, and a right-after-start determination unit 84 in addition to the height determination unit 71 described above. The condition determination unit 82 determines whether the current state of the vehicle 100 satisfies the conditions for executing the estimation process (hereinafter, referred to as "estimation permission conditions"). Examples of the estimation permission conditions include that the vehicle speed is 1 km/h or less and the accelerator pedal opening is 50% or more, for example.

If the condition determination unit 82 determines that the current state of the vehicle 100 satisfies the estimation permission conditions, the height determination unit 71 determines whether the step height H estimated by the height estimation unit 62 (as an example, the maximum value between the first step height H1 and the second step height H2) is greater than a predetermined specified height (for example, 30 mm). If the height determination unit 71 determines that the step height H is greater than the specified height, the wheel speed determination unit 83 determines whether the wheel speed is less than or equal to a predetermined threshold speed. The threshold speed is set to the maximum value of the extremely low speed range (for example, 1 km/h).

If the wheel speed determination unit 83 determines that the wheel speed is less than or equal to the threshold speed, the right-after-start determination unit 84 determines that the vehicle 100 has just started moving.

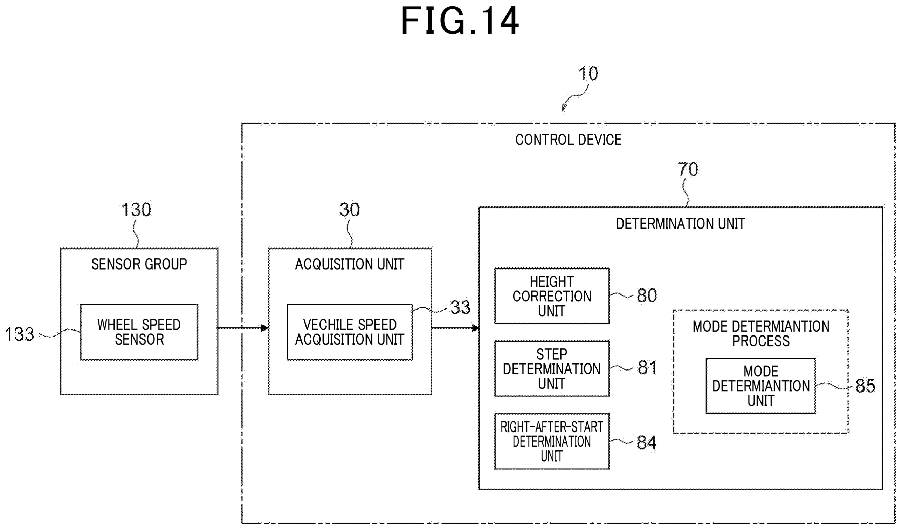

Next, the mode determination process and its related configuration will be described with reference to Fig. 14. The mode determination process is a process for determining a mode for controlling the driving force and braking force (hereinafter, referred to as "control mode").

The sensor group 130 includes the wheel speed sensors 133 as described above. The acquisition unit 30 includes the vehicle speed acquisition unit 33 as described above.

The determination unit 70 includes a mode determination unit 85. The mode determination unit 85 determines the control mode to be selected based on the vehicle speed acquired by the vehicle speed acquisition unit 33, the step height H corrected by the height correction unit 80, the result of determination by the step determination unit 81, and the result of determination by the right-after-start determination unit 84. Specifically, the determination unit 70 performs the following process.

For example, the determination unit 70 sets threshold values for the step height to be kept away from control intervention and the vehicle speed to be kept away from control intervention. If the estimated step height is less than the control intervention threshold, the determination unit 70 selects a mode in which no control intervention occurs and the driving force is output as requested by the driver. If the vehicle speed exceeds the control permitted vehicle speed, the determination unit 70 selects a mode in which no control intervention occurs and the driving force is output as requested by the driver, regardless of the step height. The determination unit 70 selects a mode in which to limit the vehicle speed to a low speed if the estimated step height is greater than or equal to the control intervention threshold and is less than the climb-over prevention threshold and the vehicle speed is less than or equal to the control permitted vehicle speed, or if the estimated step height is greater than or equal to the climb-over prevention threshold and the wheel speed is less than or equal to the control permitted vehicle speed and the vehicle is not determined as being right after starting.

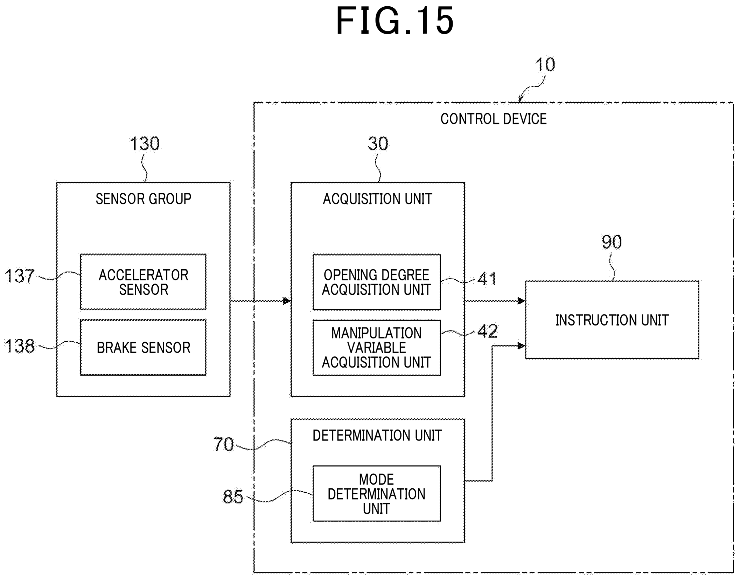

Next, the instruction unit 90 and its related configuration will be described with reference to Fig. 15. The instruction unit 90 outputs an instruction to the inverter. The instruction unit 90 may cooperate with the braking device 110 and output an instruction to the brake ECU 112 in the case of control for more actively stopping the vehicle 100 with the braking device 110.

The sensor group 130 includes an accelerator sensor 137 and a brake sensor 138. The accelerator sensor 137 is a sensor for detecting the opening degree of an accelerator pedal provided in the vehicle 100. The brake sensor 138 is a sensor for detecting the manipulation variable of the brake pedal of the vehicle 100.

The acquisition unit 30 includes an opening degree acquisition unit 41 and a manipulation variable acquisition unit 42. The opening degree acquisition unit 41 acquires the opening degree of the accelerator pedal based on a signal from the accelerator sensor 137. The manipulation variable acquisition unit 42 acquires the manipulation variable of the brake pedal based on a signal from the brake sensor 138.

The instruction unit 90 generates instructions to the inverter and the brake ECU 112 based on the opening degree acquired by the opening degree acquisition unit 41, the manipulation variable acquired by the manipulation variable acquisition unit 42, and the result of determination by the mode determination unit 85, and outputs the instructions.

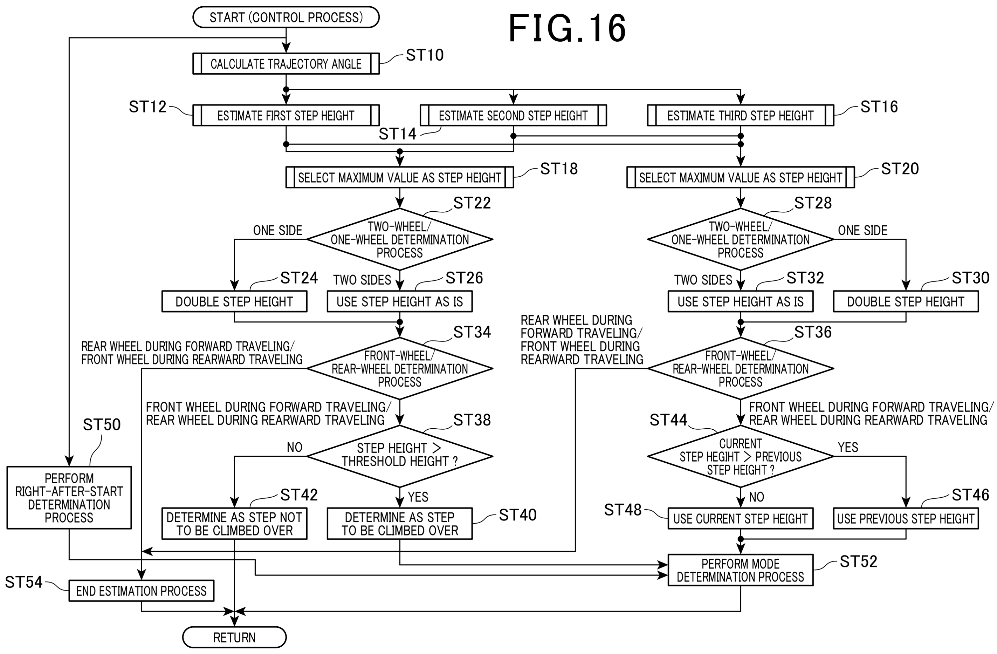

Next, operations of the control device 10 according to the present embodiment will be described. First, a flow of control process will be described with reference to Fig. 16. In the following description, steps performed by the acquisition unit 30 will be omitted. When the control process is started, the control process proceeds to step ST10 and step ST50.

In step ST10, the angle calculation unit 61 executes an angle calculation process to calculate a trajectory angle $\theta$ (see Fig. 2) based on the driving force, the longitudinal acceleration, and the vehicle speed. After step ST10, the control process proceeds to steps ST12, ST14, and ST16.

In step ST12, the height estimation unit 62 estimates the first step height H1 as the step height H, based on a maximum value $\theta_{max}$ of the trajectory angle $\theta$, a ground contact length L of the wheel 104, and a dynamic radius R of the wheel 104. After step ST12, the control process proceeds to step ST18 and step ST20.

In step ST14, the height estimation unit 62 estimates the second step height H2 as the step height H based on a rate of change $\kappa$ of the trajectory angle $\theta$, the ground contact length L of the wheel 104, and the dynamic radius R of the wheel 104. After step ST14, the control process proceeds to step ST18 and step ST20.

In step ST16, the height estimation unit 62 also estimates a third step height H3 as the step height H, based on the maximum value $\theta_{max}$ of the trajectory angle $\theta$, a downward gradient $K_{\theta}$ of the trajectory angle $\theta$, and the ground contact length L of the wheel 104. After step ST16, the control process proceeds to step ST20.

In step ST18, the height estimation unit 62 executes a first selection process to select the maximum value between the first step height H1 and the second step height H2 as the step height H. After step ST18, the control process proceeds to step ST22.

In step ST20, the height estimation unit 62 executes a second selection process to select the maximum value among the first step height H1, the second step height H2, and the third step height H3 as the step height H. After step ST20, the control process proceeds to step ST28.

In step ST22, the determination unit 70 executes a two-wheel/one-wheel determination process to determine whether two wheels have climbed up on the step 200 or one wheel has climbed up on the step 200. As the two-wheel/one-wheel determination process, any one of the two-wheel/one-wheel determination processes according to the first to third examples is executed. If it is determined in step ST22 that one wheel has climbed up on the step 200, the control process proceeds to step ST24. On the other hand, if it is determined in step ST22 that the two wheels have climbed up on the step 200, the control process proceeds to step ST26.

In step ST24, the height correction unit 80 performs a correction to double the step height H selected in the first selection process. After step ST24, the control process proceeds to step ST34.

In step ST26, the height correction unit 80 adopts the step height H selected in the first selection process as it is. After step ST26, the control process proceeds to step ST34.

In step ST28, the determination unit 70 executes a two-wheel/one-wheel determination process to determine whether two wheels have climbed up on the step 200 or one wheel has climbed up on the step 200. As the two-wheel/one-wheel determination process, any one of the two-wheel/one-wheel determination processes according to the first to third examples is executed. If it is determined in step ST28 that one wheel has climbed up on the step 200, the control process proceeds to step ST30. On the other hand, if it is determined in step ST28 that the two wheels have climbed up on the step 200, the control process proceeds to step ST32.

In step ST30, the height correction unit 80 performs a correction to double the step height H selected in the second selection process. After step ST30, the control process proceeds to step ST36.

In step ST32, the height correction unit 80 adopts the step height H selected in the second selection process as it is. After step ST32, the control process proceeds to step ST36.

In step ST34, the determination unit 70 executes a front-wheel/rear-wheel determination process to determine whether the front wheel has climbed up on the step 200 or the rear wheel has climbed up on the step 200. If it is determined in step ST34 that the front wheel has climbed up on the step 200 during forward traveling, the control process proceeds to step ST38. Similarly, if it is determined in step ST34 that the rear wheel has climbed up on the step 200 during rearward traveling, the control process proceeds to step ST38. On the other hand, if it is determined in step ST34 that the rear wheel has climbed up on the step 200 during forward traveling, the control process proceeds to step ST54. Similarly, if it is determined in step ST34 that the front wheel has climbed up on the step 200 during rearward traveling, the control process proceeds to step ST54.

In step ST36, the determination unit 70 executes a front-wheel/rear-wheel determination process to determine whether the front wheel has climbed up on the step 200 or the rear wheel has climbed up on the step 200. If it is determined in step ST36 that the front wheel has climbed up on the step 200 during forward traveling, the control process proceeds to step ST44. Similarly, if it is determined in step ST36 that the rear wheel has climbed up on the step 200 during rearward traveling, the control process proceeds to step ST44. On the other hand, if it is determined in step ST36 that the rear wheel has climbed up on the step 200 during forward traveling, the control process proceeds to step ST54. Similarly, if it is determined in step ST36 that the front wheel has climbed up on the step 200 during rearward traveling, the control process proceeds to step ST54.

In step ST38, the step determination unit 81 performs a climb-over determination by determining whether the step height H is greater than a predetermined threshold height (for example, 50 mm). If it is determined in step ST38 that the step height H is greater than the threshold height, the control process proceeds to step ST40. On the other hand, if it is determined in step ST38 that the step height H is less than or equal to the threshold height, the control process proceeds to step ST42. If it is determined in step ST34 described above that the rear wheel has climbed up on the step 200 during forward traveling, or if it is determined that the front wheel has climbed up on the step 200 during rearward traveling, the control processing proceeds to step ST54, whereby the climb-over determination in the step ST38 is canceled.

In step ST40, the step determination unit 81 determines that the step should be climbed over. After step ST40, the control process proceeds to step ST52.

In step ST42, the step determination unit 81 determines that the step should not be climbed over. After step ST42, the control process proceeds to step ST52.

In step ST44, the height correction unit 80 performs height determination by determining whether the current step height H selected in the current control process is greater than the previous step height H selected in the previous control process. If it is determined in step ST44 that the current step height H is greater than the previous step height H, the control process proceeds to step ST46. On the other hand, if it is determined in step ST44 that the current step height H is not greater than the previous step height H (that is, the current step height H is less than the previous step height H), the control processing proceeds to step ST48. If it is determined in step ST36 described above that the rear wheel has climbed up on the step 200 during forward traveling, or if it is determined that the front wheel has climbed up on the step 200 during rearward traveling, the control processing proceeds to step ST54, whereby the height determination in the step ST44 is canceled.

In step ST46, the height correction unit 80 adopts the current step height H as the step height H. After step ST46, the control process proceeds to step ST52.

In step ST48, the height correction unit 80 adopts the previous step height H as the step height H. After step ST48, the control process proceeds to step ST52.

In step ST50, the determination unit 70 executes a right-after-start determination process to determine whether the vehicle 100 has just started moving. After step ST50, the control process proceeds to step ST52.

In step ST52, the determination unit 70 executes a mode determination process to determine the control mode. After step ST52, the control process proceeds to step ST10.

In step ST54, the CPU 12 ends the estimation process. After step ST54, the control process proceeds to step ST10. After the end of the estimation process, the control process proceeds to step ST10, where a new control process is executed from the beginning.

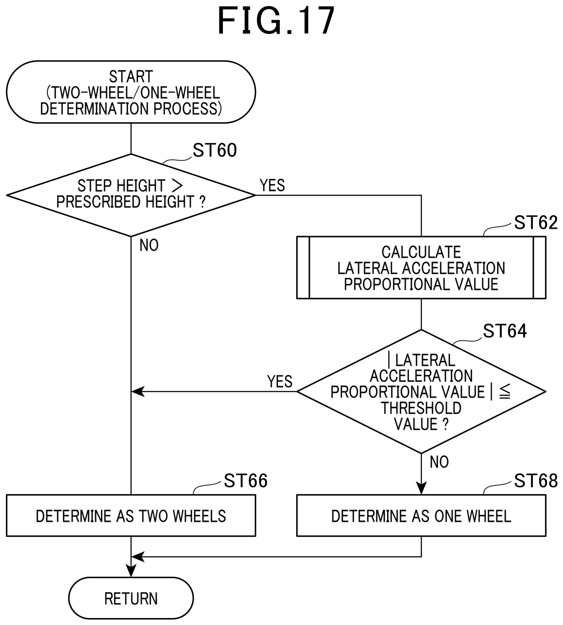

Next, a flow of the two-wheel/one-wheel determination process according to the first example will be described with reference to Fig. 17.

In step ST60, the height determination unit 71 determines whether the step height H (for example, the first step height H1) estimated by the height estimation unit 62 is greater than a predetermined specified height (for example, 2 cm). If it is determined in step ST60 that the step height H is higher than the specified height, the control process proceeds to step ST62. On the other hand, if it is determined in step ST60 that the step height H is not greater than the specified height (that is, the step height H is less than or equal to the specified height), the two-wheel/one-wheel determination process proceeds to step ST66.

In step ST62, the proportional value calculation unit 72 calculates the lateral acceleration proportional value $\delta_G$ that is a value obtained by comparing the lateral acceleration with the yaw rate, based on the lateral acceleration and the yaw rate. After step ST62, the two-wheel/one-wheel determination process proceeds to step ST64.

In step ST64, the two-wheel/one-wheel determination unit 73 determines whether the absolute value of the lateral acceleration proportional value $\delta_G$ is less than or equal to a predetermined threshold value. If it is determined in step ST64 that the absolute value of the lateral acceleration proportional value $\delta_G$ is less than or equal to the threshold value, the two-wheel/one-wheel determination process proceeds to step ST66. On the other hand, if it is determined in step ST64 that the absolute value of the lateral acceleration proportional value $\delta_G$ is not less than or equal to the threshold value (that is, the absolute value of the lateral acceleration proportional value $\delta_G$ is greater than the threshold value), the two-wheel/one-wheel determination process proceeds to step ST68.

In step ST66, the two-wheel/one-wheel determination unit 73 determines that the two wheels have climbed up on the step 200. After step ST66, the two-wheel/one-wheel determination process proceeds to step ST60.

In step ST68, the two-wheel/one-wheel determination unit 73 determines that one wheel has climbed up on the step 200. After step ST68, the two-wheel/one-wheel determination process proceeds to step ST60.

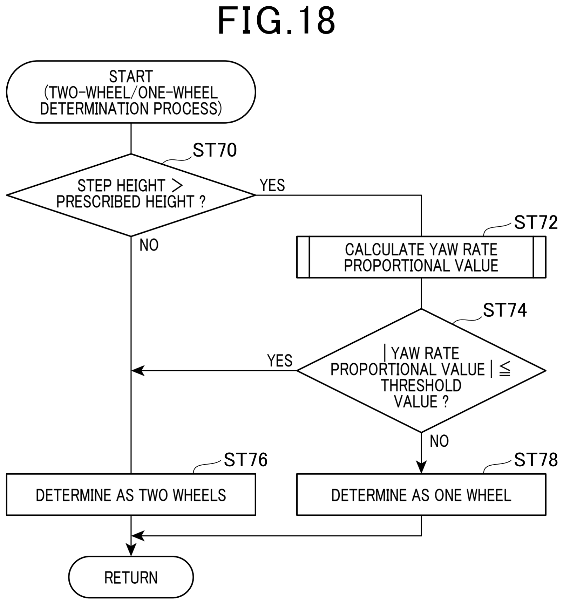

Next, a flow of the two-wheel/one-wheel determination process according to the second example will be described with reference to Fig. 18.

In step ST70, the height determination unit 71 determines whether the step height H (for example, the first step height H1) estimated by the height estimation unit 62 is greater than a predetermined specified height (for example, 2 cm). If it is determined in step ST70 that the step height H is greater than the specified height, the two-wheel/one-wheel determination process proceeds to step ST72. On the other hand, if it is determined in step ST70 that the step height H is not greater than the specified height (that is, the step height H is less than or equal to the specified height), the two-wheel/one-wheel determination process proceeds to step ST76.

In step ST72, the proportional value calculation unit 72 calculates the yaw rate proportional value $\delta_r$ that is a value obtained by comparing the wheel speed yaw rate with the actual yaw rate, based on the actual yaw rate and the wheel speed yaw rate. After step ST72, the two-wheel/one-wheel determination process proceeds to step ST74.

In step ST74, the two-wheel/one-wheel determination unit 73 determines whether the absolute value of the yaw rate proportional value $\delta_r$ is less than or equal to a predetermined threshold value. If it is determined in step ST74 that the absolute value of the yaw rate proportional value $\delta_r$ is less than or equal to the threshold value, the two-wheel/one-wheel determination process proceeds to step ST76. On the other hand, if it is determined in step ST74 that the absolute value of the yaw rate proportional value $\delta_r$ is not less than or equal to the threshold value (that is, the absolute value of the yaw rate proportional value $\delta_r$ is greater than the threshold value), the two-wheel/one-wheel determination process proceeds to step ST78.

In step ST76, the two-wheel/one-wheel determination unit 73 determines that the two wheels have climbed up on the step 200. After step ST76, the two-wheel/one-wheel determination process proceeds to step ST70.

In step ST78, the two-wheel/one-wheel determination unit 73 determines that one wheel has climbed up on the step 200. After step ST78, the two-wheel/one-wheel determination process proceeds to step ST70.

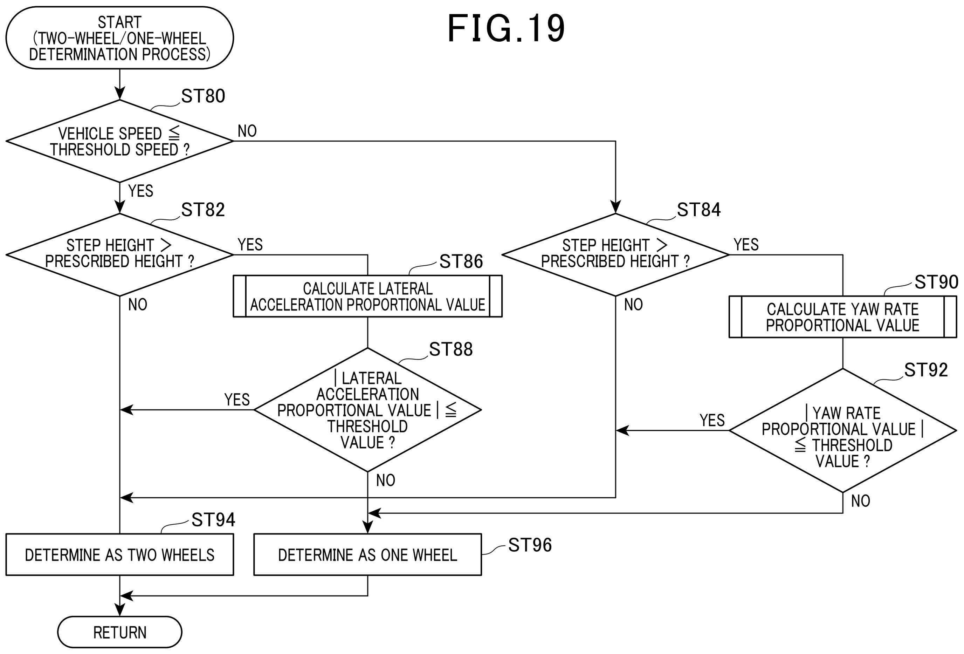

Next, a flow of the two-wheel/one-wheel determination process according to the third example will be described with reference to Fig. 19.

In step ST80, the vehicle speed determination unit 74 determines whether the vehicle speed is less than or equal to a predetermined threshold speed (for example, 1 km/h). If it is determined in step ST80 that the vehicle speed is less than or equal to the threshold speed, the two-wheel/one-wheel determination process proceeds to step ST82. On the other hand, if it is determined in step ST80 that the vehicle speed is not less than or equal to the threshold speed (that is, the vehicle speed exceeds the threshold speed), the two-wheel/one-wheel determination process proceeds to step ST84.

In step ST82, the height determination unit 71 determines whether the step height H (for example, the first step height H1) estimated by the height estimation unit 62 is greater than a predetermined specified height (for example, 2 cm). If it is determined in step ST82 that the step height H is greater than the specified height, the two-wheel/one-wheel determination process proceeds to step ST86. On the other hand, if it is determined in step ST82 that the step height H is not greater than the specified height (that is, the step height H is less than or equal to the specified height), the two-wheel/one-wheel determination process proceeds to step ST94.

In step ST86, the first proportional value calculation unit 72A calculates the lateral acceleration proportional value $\delta_G$ that is a value obtained by comparing the lateral acceleration with the yaw rate, based on the lateral acceleration and the yaw rate. After step ST86, the two-wheel/one-wheel determination process proceeds to step ST88.

In step ST88, the two-wheel/one-wheel determination unit 73 determines whether the absolute value of the lateral acceleration proportional value $\delta_G$ is less than or equal to a predetermined threshold value. If it is determined in step ST88 that the absolute value of the lateral acceleration proportional value $\delta_G$ is less than or equal to the threshold value, the two-wheel/one-wheel determination process proceeds to step ST94. On the other hand, if it is determined in step ST88 that the absolute value of the lateral acceleration proportional value $\delta_G$ is not less than or equal to the threshold value (that is, the absolute value of the lateral acceleration proportional value $\delta_G$ is greater than the threshold value), the two-wheel/one-wheel determination process proceeds to step ST90.

In step ST90, the second proportional value calculation unit 72B calculates the yaw rate proportional value $\delta_r$ that is a value obtained by comparing the wheel speed yaw rate with the actual yaw rate, based on the actual yaw rate and the wheel speed yaw rate. After step ST90, the two-wheel/one-wheel determination process proceeds to step ST92.

In step ST92, the two-wheel/one-wheel determination unit 73 determines whether the absolute value of the yaw rate proportional value $\delta_r$ is less than or equal to a predetermined threshold value. If it is determined in step ST92 that the absolute value of the yaw rate proportional value $\delta_r$ is less than or equal to the threshold value, the two-wheel/one-wheel determination process proceeds to step ST94. On the other hand, if it is determined in step ST92 that the absolute value of the yaw rate proportional value $\delta_r$ is not less than or equal to the threshold value (that is, the absolute value of the yaw rate proportional value $\delta_r$ is greater than the threshold value), the two-wheel/one-wheel determination process proceeds to step ST96.

In step ST94, the two-wheel/one-wheel determination unit 73 determines that the two wheels have climbed up on the step 200. After step ST94, the two-wheel/one-wheel determination process proceeds to step ST80.

In step ST96, the two-wheel/one-wheel determination unit 73 determines that one wheel has climbed up on the step 200. After step ST96, the two-wheel/one-wheel determination process proceeds to step ST80.

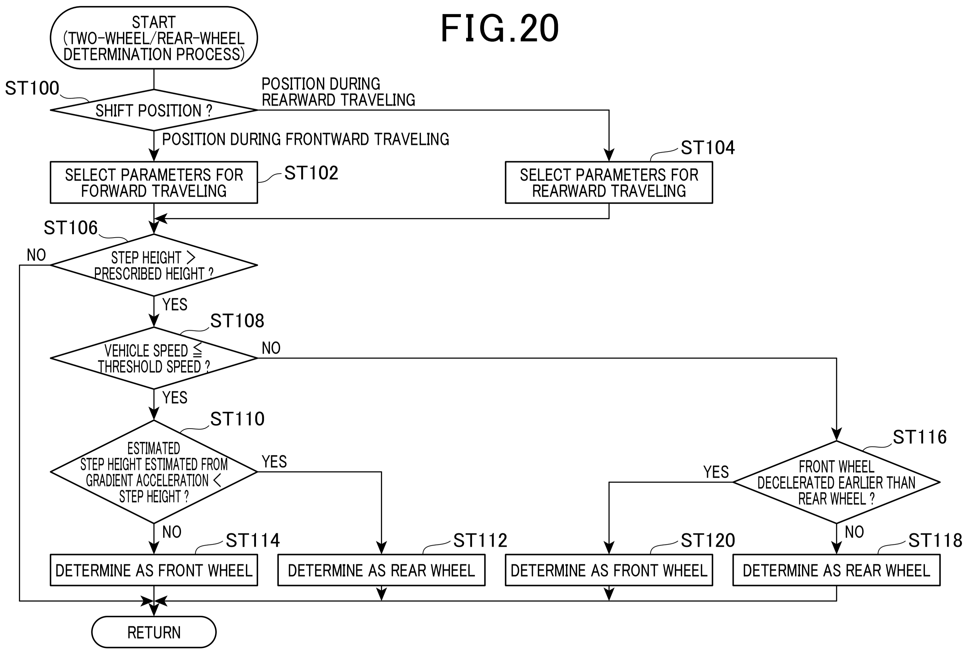

Next, a flow of the two-wheel/one-wheel determination process will be described with reference to Fig. 20.

In step ST100, the shift position determination unit 75 determines the position of the shift. If it is determined in step ST100 that the position of the shift is a position forward traveling (for example, position D, position B, or position S), the front-wheel/rear-wheel determination process proceeds to step ST102. On the other hand, if it is determined in step ST100 that the position of the shift is a position for rearward traveling (that is, position R), the front-wheel/rear-wheel determination process proceeds to step ST104.

In step ST102, the parameter selection unit 76 selects parameters for forward traveling. After step ST102, the front-wheel/rear-wheel determination process proceeds to step ST106.

In step ST104, the parameter selection unit 76 selects parameters for rearward traveling. After step ST104, the front-wheel/rear-wheel determination process proceeds to step ST106.

In step ST106, the height determination unit 71 determines whether the step height H estimated by the height estimation unit 62 (for example, the maximum value between the first step height H1 and the second step height H2) is greater than a predetermined specified height (for example, 10 cm). If it is determined in step ST106 that the step height H is greater than the specified height, the front-wheel/rear-wheel determination process proceeds to step ST108. On the other hand, if it is determined in step ST106 that the step height H is not greater than the specified height (that is, the step height H is less than or equal to the specified height), the front-wheel/rear-wheel determination process proceeds to step ST100.

In step ST108, the vehicle speed determination unit 74 determines whether the vehicle speed is less than or equal to a predetermined threshold speed (for example, 1 km/h). If it is determined in step ST108 that the vehicle speed is equal to or less than the threshold speed, the front-wheel/rear-wheel determination process proceeds to step ST110. On the other hand, if it is determined in step ST108 that the vehicle speed is not less than or equal to the threshold speed (that is, the vehicle speed exceeds the threshold speed), the front-wheel/rear-wheel determination process proceeds to step ST112.

In step ST110, the acceleration estimation unit 77 estimates the acceleration along the traveling direction of the vehicle 100 based on the front wheel speed or the rear wheel speed. Next, the gradient acceleration calculation unit 78 calculates the gradient acceleration that is the difference between the actual acceleration and the estimated acceleration. Then, the front-wheel/rear-wheel determination unit 79 determines whether the estimated step height $H_{slope}$ estimated from the gradient acceleration is smaller than the step height H. If it is determined in step ST110 that the estimated step height $H_{slope}$ is smaller than the step height H, the front-wheel/rear-wheel determination process proceeds to step ST114. On the other hand, if it is determined in step ST110 that the estimated step height $H_{slope}$ is not smaller than the step height H (that is, the estimated step height $H_{slope}$ is greater than or equal to the step height H), the front-wheel/rear-wheel determination process proceeds to step ST116.

In step ST112, the front-wheel/rear-wheel determination unit 79 determines that the rear wheel has climbed up on the step 200. After step ST112, the front-wheel/rear-wheel determination process proceeds to step ST100.

In step ST114, the front-wheel/rear-wheel determination unit 79 determines that the front wheel has climbed up on the step 200. After step ST114, the front-wheel/rear-wheel determination process proceeds to step ST100.

In step ST116, the front-wheel/rear-wheel determination unit 79 determines whether the front wheel has decelerated before the rear wheel, based on the front wheel speed and the rear wheel speed. If it is determined in step ST116 that the front wheel has decelerated before the rear wheel, the front-wheel/rear-wheel determination process proceeds to step ST118. On the other hand, if it is determined in step ST116 that the rear wheel has decelerated before the front wheel, the front-wheel/rear-wheel determination process proceeds to step ST120.

In step ST118, the front-wheel/rear-wheel determination unit 79 determines that the rear wheel has climbed up on the step 200. After step ST118, the front-wheel/rear-wheel determination process proceeds to step ST100.

In step ST120, the front-wheel/rear-wheel determination unit 79 determines that the front wheel has climbed up on the step 200. After step ST120, the front-wheel/rear-wheel determination process proceeds to step ST100.

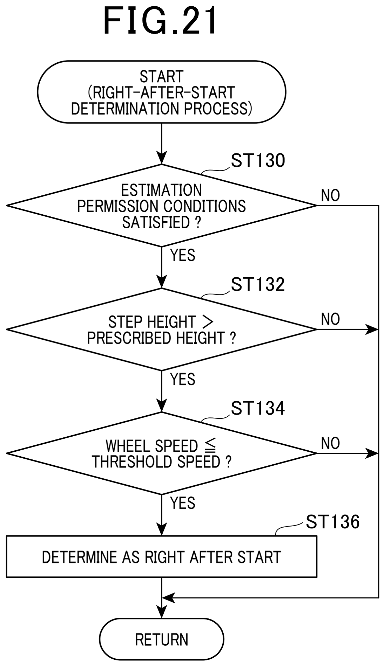

Next, a flow of the right-after-start determination process will be described with reference to Fig. 21.

In step ST130, the condition determination unit 82 determines whether the current state of the vehicle 100 satisfies the estimation permission condition. If it is determined in step ST130 that the current state of the vehicle 100 satisfies the estimation permission condition, the right-after-start determination process proceeds to step ST132. On the other hand, if it is determined in step ST130 that the current state of the vehicle 100 does not satisfy the estimation permission condition, the right-after-start determination process executes step ST130 again.

In step ST132, the height determination unit 71 determines whether the step height H estimated by a height estimation unit 62 (for example, the maximum value between a first step height H1 and a second step height H2) is greater than a predetermined specified height (for example, 30 mm). If it is determined in step ST132 that the step height H is greater than the specified height, the right-after-start determination process proceeds to step ST134. On the other hand, if it is determined in step ST132 that the step height H is not greater than the specified height (that is, the step height H is less than or equal to the specified height), the right-after-start determination process proceeds to step ST130.

In step ST134, the wheel speed determination unit 83 determines whether the wheel speed is equal to or less than a predetermined threshold speed (for example, 1 km/h). If it is determined in step ST134 that the wheel speed is equal to or less than the threshold speed, the right-after-start determination process proceeds to step ST136. On the other hand, if it is determined in step ST134 that the wheel speed is not less than or equal to the threshold speed (that is, the wheel speed exceeds the threshold speed), the right-after-start determination process proceeds to step ST130.

In step ST136, the right-after-start determination unit 84 determines that the vehicle 100 has just started moving. After step ST136, the right-after-start determination process proceeds to step ST130.

Next, operation examples of the control device 10 according to the present embodiment will be described.

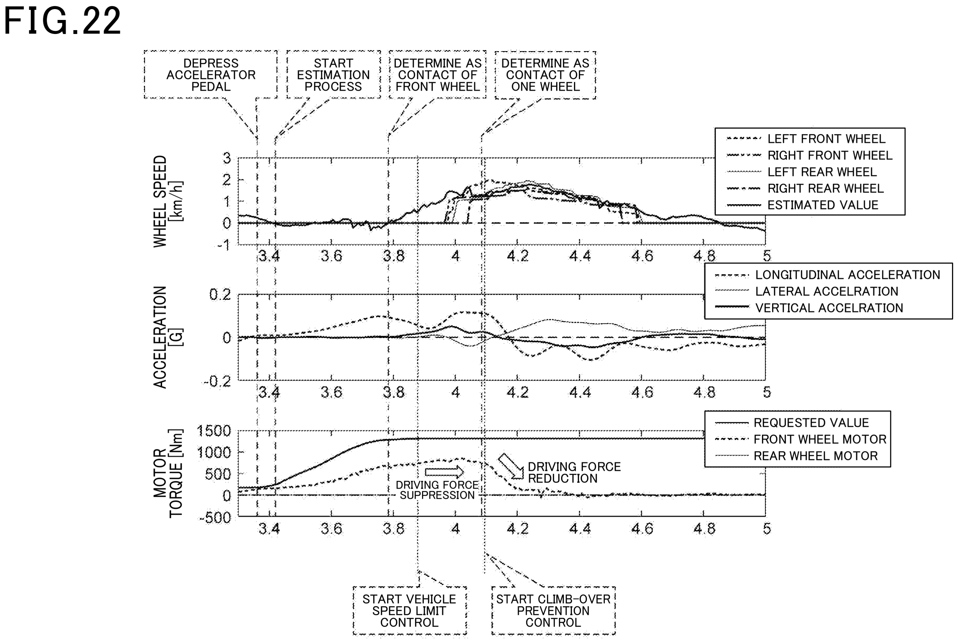

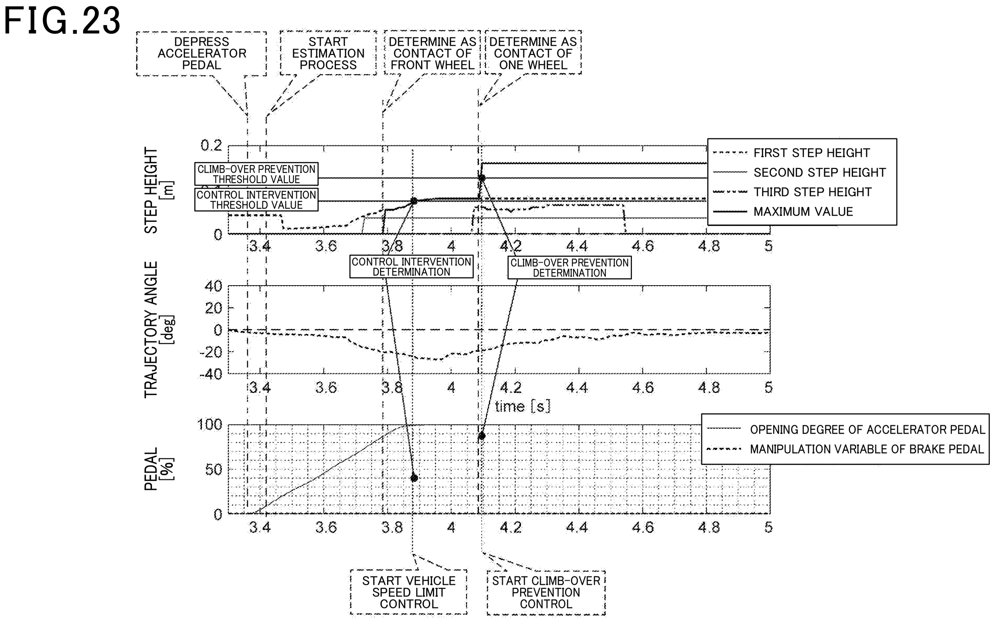

A first operation example illustrated in Figs. 22 and 23 is an example in which the vehicle 100 travels forward with the throttle wide open while one front wheel is in contact with the step 200. In the first operation example, the vehicle 100 is configured as a four-wheel-drive vehicle 100. In the first operation example, when the estimation process is started after the accelerator pedal is depressed, it is determined that the front wheel is in contact with the step 200. Thereafter, when the estimated step height H exceeds the control intervention threshold, control for limiting the vehicle speed (hereinafter, referred to as "vehicle speed limit control") is started. When the vehicle speed limit control is started, control to suppress the driving force is executed. Next, if it is determined that one wheel is in contact with the step 200 and the estimated step height H exceeds the climb-over prevention threshold value, control to prevent the vehicle from climbing over the step 200 (hereinafter, referred to as "climb-over prevention control") is started. When the climb-over prevention control is started, the driving force is reduced.

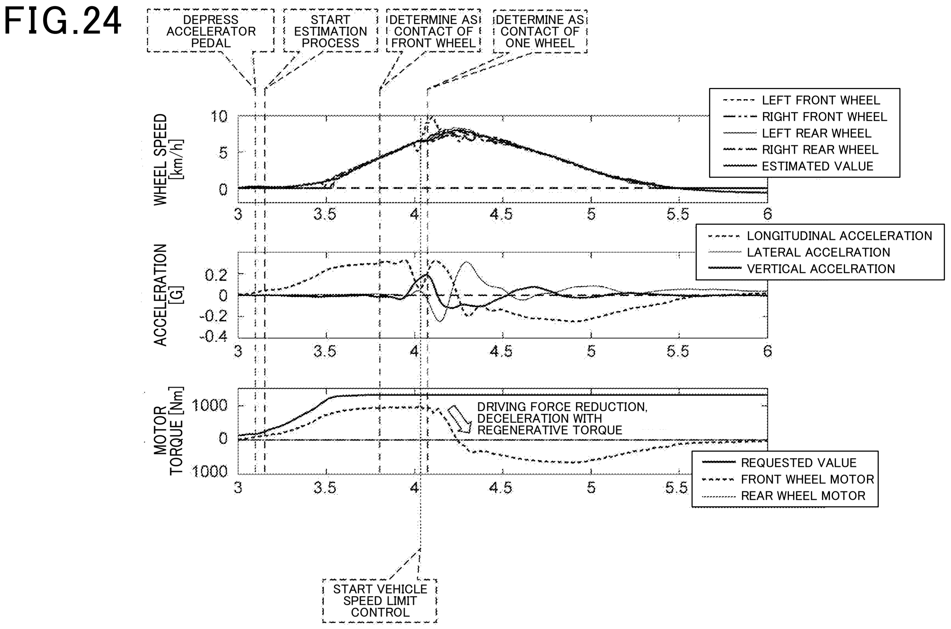

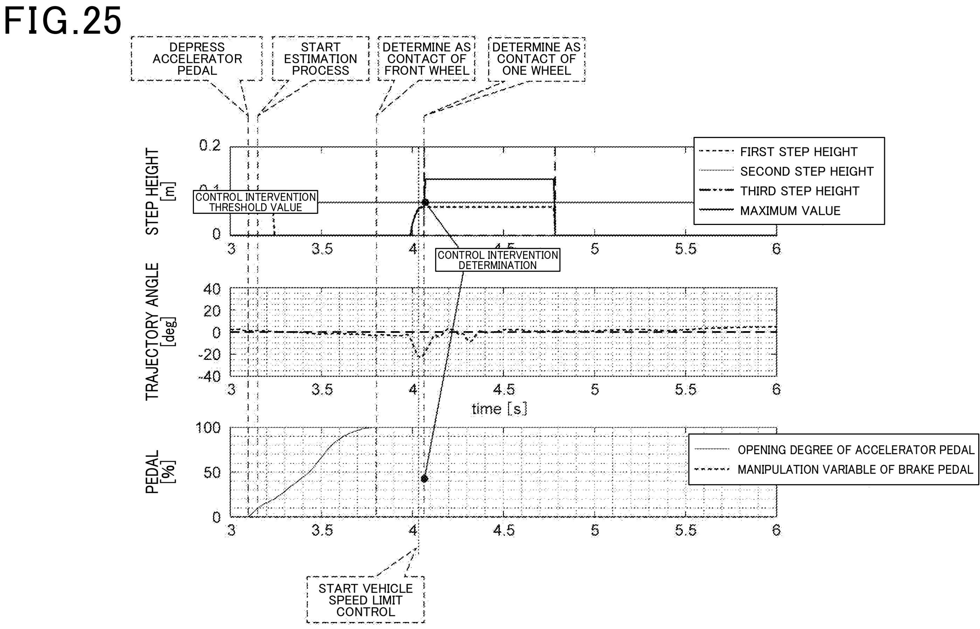

A second operation example illustrated in Figs. 24 and 25 is an example in which the vehicle 100 travels forward with the throttle wide open while one front wheel is away from the step 200. In the second operation example, the vehicle 100 is configured as a four-wheel-drive vehicle 100. In the second operation example, if the estimation process is started after the accelerator pedal is depressed and the front wheel contacts the step 200, it is determined that the front wheel is in contact with the step 200. Thereafter, if the estimated step height H exceeds the control intervention threshold, the vehicle speed limit control is started. When the vehicle speed limit control is started, the driving force is reduced and the vehicle is decelerated by the regenerative torque.

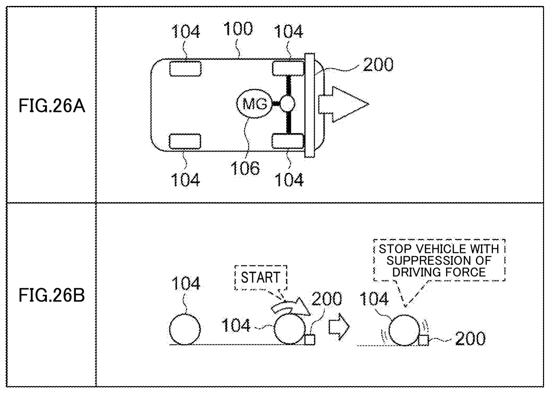

A third operation example illustrated in Fig. 26 is an example in which the vehicle 100 travels forward (is started) with the two front wheels in contact with a curb (for example, the step 200 with the step height H of 150 mm). In the third to ninth operation examples described below, the vehicle 100 is configured as a front-wheel-drive vehicle 100. In the third operation example, it is determined that the curb is a step not to be climbed over, and control is performed to reduce the driving force and stop the vehicle 100 (that is, climb-over prevention control).

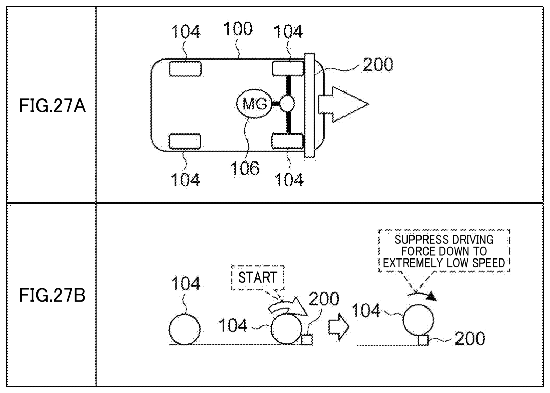

A fourth operation example illustrated in Fig. 27 is an example in which the vehicle 100 travels forward (is started) with the two front wheels in contact with a curb (for example, the step 200 with the step height H of 90 mm). In the fourth operation example, it is determined that the curb is a step to be climbed over, and control is performed to suppress the driving force and continue traveling at an extremely low speed.

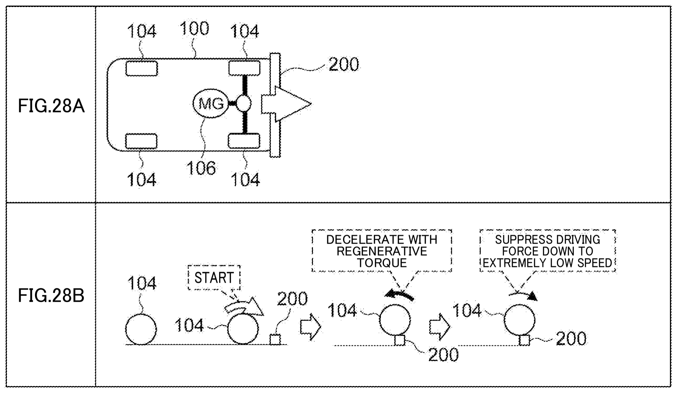

A fifth operation example illustrated in Fig. 28 is an example in which the vehicle 100 travels forward (accelerates) when there is a gap between a curb (for example, the step 200 with the step height H of 150 mm) and the two front wheels. In the fifth operation example, it is determined that the curb is a step to be climbed over, and control is performed to decelerate the vehicle using regenerative torque, suppress the driving force, and continue traveling at an extremely low speed.

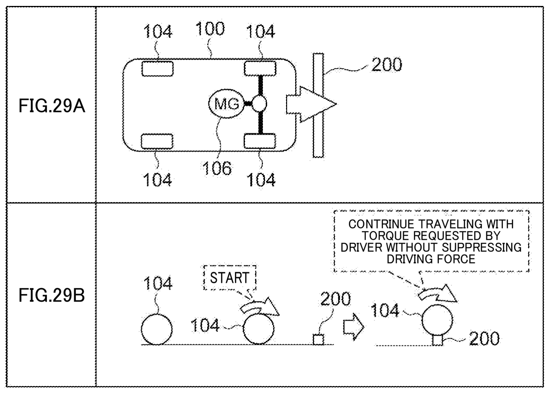

A sixth operation example illustrated in Fig. 29 is an example in which the two front wheels contact a curb (for example, the step 200 with the step height H of 150 mm) while the vehicle 100 is traveling at a speed of 9 km/h or more, for example. In the sixth operation example, it is determined that the curb corresponds to a step to be climbed over, and control is performed to continue traveling using the torque requested by the driver without restricting the driving force.

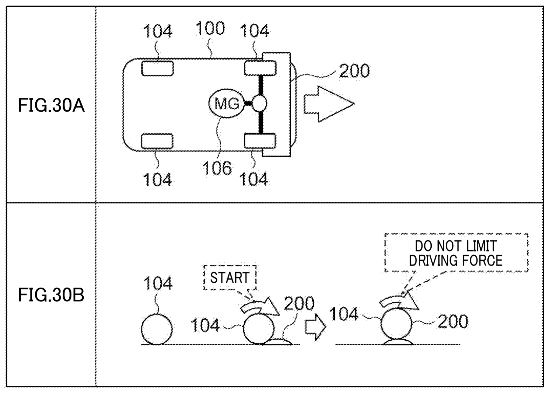

A seventh operation example illustrated in Fig. 30 is an example in which the vehicle 100 travels forward (is started) with the two front wheels in contact with a speed bump (for example, the step 200 with the step height H of 40 mm and a gentle slope). In the seventh operation example, it is determined that the speed bump corresponds to a step to be climbed over, and control is performed to continue traveling without restricting the driving force.

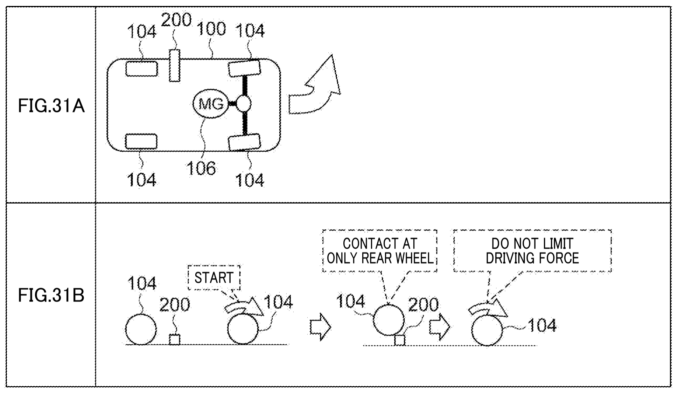

An eighth operation example illustrated in Fig. 31 is an example in which the left rear wheel contacts a curb due to an inner wheel difference when the vehicle 100 makes a left turn after starting. In the eighth operation example, if only the rear wheel contacts the curb due to an inner wheel difference, it is determined that only the rear wheel have contacted the curb, and control is performed to continue driving without restricting the driving force.

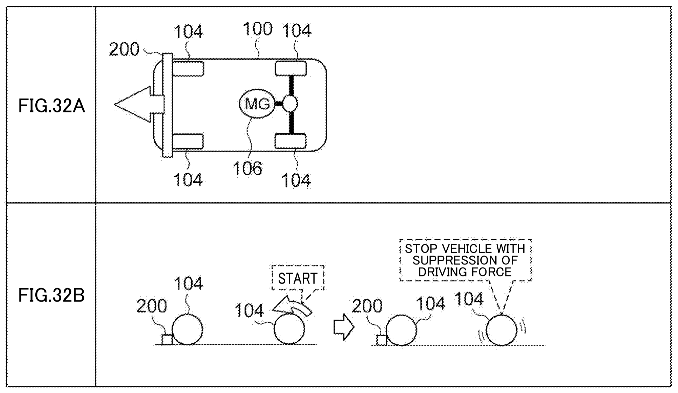

A ninth operation example illustrated in Fig. 32 is an example in which the vehicle 100 travels rearward (is started) with the left and right rear wheels in contact with a curb (for example, the step 200 with the step height H of 150 mm). In the ninth operation example, it is determined that the curb is a step not to be climbed over, and control is performed to reduce the driving force and stop the vehicle 100.

Next, advantageous effects of the control device 10 according to the present embodiment will be described.

In the control device 10 according to the present embodiment, the angle calculation unit 61 calculates the trajectory angle $\theta$ based on the driving force and the longitudinal acceleration (step ST10), and the height estimation unit 62 estimates the step height H based on the trajectory angle $\theta$ (steps ST12 to ST16). Since the driving force and longitudinal acceleration can be obtained even at extremely low speeds, the step height H can be estimated more accurately and quickly than in the case of estimating the step height H based on the torque value at the time when the wheel 104 starts moving.

In the control device 10, the step determination unit 81 determines whether the vehicle 100 should climb-over the step 200 based on the step height H estimated by the height estimation unit 62 (steps ST38 to ST42). Therefore, it is possible to accurately and quickly determine whether the vehicle 100 should climb-over the step 200.

In the control device 10, the height estimation unit 62 estimates the step height H (that is, the first step height H1) based on the maximum value $\theta_{max}$ of the trajectory angle $\theta$, the ground contact length L of the wheel 104, and the dynamic radius of the wheel 104 (step ST12). The maximum value $\theta_{max}$ of the trajectory angle $\theta$ is the value when the vehicle 100 climbs over the step 200, and therefore the step height H can be estimated more accurately.

In the control device 10, the height estimation unit 62 estimates the step height H (that is, the second step height H2) based on the rate of change $\kappa$ of the trajectory angle $\theta$, the ground contact length L of the wheel 104, and the dynamic radius of the wheel 104 (step ST14). The rate of change $\kappa$ of the trajectory angle $\theta$ can be obtained before the vehicle 100 climbs over the step 200, so that it is possible to quickly detect that the wheel 104 has contacted the step 200 before the trajectory angle $\theta$ reaches its maximum value. Accordingly, it is possible to estimate the step height H quickly before the vehicle 100 climbs over the step 200.

In the control device 10, the height estimation unit 62 estimates the step height H (that is, the third step height H3) based on the maximum value $\theta_{max}$ of the trajectory angle $\theta$, the downward gradient $K_\theta$ of the trajectory angle $\theta$, and the ground contact length L of the wheel 104 (step ST16). Therefore, it is possible to estimate the step height H accurately even when the vehicle 100 climbs over the step 200 obliquely in a plan view.

In the control device 10, the height estimation unit 62 estimates the first step height H1, the second step height H2, and the third step height H3, and selects the maximum value among the first step height H1, the second step height H2, and the third step height H3 as the step height H (step ST20). Therefore, it is possible to estimate the step height H more accurately than when only one of the first step height H1, the second step height H2, and the third step height H3 is estimated.

In the control device 10, the height estimation unit 62 estimates the first step height H1 and the second step height H2, and selects the maximum value of the first step height H1 and the second step height H2 as the step height H (step ST18). Then, the step determination unit 81 determines whether the vehicle 100 should climb-over the step 200 based on the step height H and a predetermined threshold height (steps ST38 to ST42). Therefore, it is possible to estimate the step height H more accurately than when only one of the first step height H1 and the second step height H2 is estimated, and it is possible to accurately determine whether the vehicle 100 should climb-over the step 200.

In the control device 10, in the two-sided/one-sided determination process according to the first example, the proportional value calculation unit 72 calculates the lateral acceleration proportional value $\delta_G$ that is a value obtained by comparing the lateral acceleration with the yaw rate, based on the lateral acceleration and the yaw rate (step ST62). The two-wheel/one-wheel determination unit 73 performs the two-wheel/one-wheel determination to determine whether the two wheels have climbed up on the step 200 or one wheel 104 has climbed up on the step 200, based on the lateral acceleration proportional value $\delta_G$ (steps ST64 to ST66). When one wheel has climbed up on the step 200, the vehicle 100 inclines to the left or right compared to when the two wheels have climbed up on the step 200, and therefore, the inclination of the vehicle 100 can be detected as lateral acceleration. Calculating the lateral acceleration proportional value $\delta_G$ makes it possible to cancel the lateral acceleration that would occur during cornering of the vehicle 100. This allows the two-wheel/one-wheel determination to be accurately executed.

In the two-sided/one-sided determination process according to the second example, the control device 10 calculates the yaw rate proportional value $\delta_r$ that is a value obtained by comparing the wheel speed yaw rate with the actual yaw rate, based on the actual yaw rate and the wheel speed yaw rate (step ST72). The two-wheel/one-wheel determination unit 73 performs the two-wheel/one-wheel determination based on the yaw rate proportional value $\delta_r$ (steps ST74 to ST76). Calculating the yaw rate proportional value $\delta_r$ makes it possible to cancel the lateral acceleration that would occur during cornering of the vehicle 100. This allows the two-wheel/one-wheel determination to be accurately executed.

In the control device 10, in the two-sided/one-sided determination process according to the third example, the first proportional value calculation unit 72A calculates the lateral acceleration proportional value $\delta_G$ (step ST86), and the second proportional value calculation unit 72B calculates the yaw rate proportional value $\delta_r$ (step ST90). If the vehicle speed is lower than or equal to a predetermined threshold speed, the two-wheel/one-wheel determination unit 73 performs the two-wheel/one-wheel determination based on the lateral acceleration proportional value $O_G$ (steps ST88, ST94, and ST96), and if the vehicle speed exceeds the threshold speed, the two-wheel/one-wheel determination unit 73 performs the two-wheel/one-wheel determination based on the yaw rate proportional value $\delta_r$ (steps ST92, ST94, and ST96). Calculating the yaw rate proportional value $\delta_r$ is more accurate at higher vehicle speeds than at extremely low speeds, but the wheel speed sensors 133 cannot detect the wheel speed at extremely low speeds. Therefore, switching the lateral acceleration proportional value $\delta_G$ and the yaw rate proportional value $\delta_r$ in accordance with the vehicle speed makes it possible to accurately execute the two-wheel/one-wheel determination, regardless of the vehicle speed.

In the control device 10, the height correction unit 80 corrects the step height H based on the result of determination by the two-wheel/one-wheel determination unit 73 (steps ST24, ST26, ST30, and ST32). Therefore, it is possible to obtain the accurate step height H compared to the case where the step height H is not corrected.

In the control device 10, if the vehicle speed is lower than or equal to a predetermined threshold speed, the front-wheel/rear-wheel determination unit 79 performs front-wheel/rear-wheel determination to determine whether the front wheel has climbed up on the step 200 or the rear wheel has climbed up on the step 200, based on the estimated step height $H_{slope}$ estimated from the gradient acceleration and the step height H (steps ST110 to ST114), and if the vehicle speed exceeds the threshold speed, the front-wheel/rear-wheel determination unit 79 performs the frontwheel/rear-wheel determination based on the front wheel speed and the rear wheel speed (steps ST116 to ST120). The front wheel speed and rear wheel speed can be obtained with high accuracy at vehicle speeds higher than extremely low speeds, but cannot be detected at extremely low speeds. Therefore, switching between the front-wheel/rear-wheel determination in accordance with the vehicle speed makes it possible to accurately execute the front-wheel/rear-wheel determination, regardless of the vehicle speed.

In the control device 10, if the vehicle 100 is traveling forward and the front-wheel/rear-wheel determination unit 79 determines that the front wheel has climbed up on the step 200, the step determination unit 81 executes the climb-over determination to determine whether the vehicle 100 should climb-over the step 200 (steps ST38 to ST42), and if the front-wheel/rear-wheel determination unit 79 determines that the rear wheel has climbed up on the step 200, the step determination unit 81 cancels the climb-over determination (step ST54). Therefore, for example, if only the rear wheel contacts a curb due to an inner wheel difference, the vehicle 100 can continue to travel forward as requested by the driver.

Similarly, in the control device 10, if the vehicle 100 is traveling rearward, if it is determined by the front-wheel/rear-wheel determination that the rear wheel has climbed up on the step 200, the step determination unit 81 executes the climb-over determination (steps ST38 to ST42), and if the front-wheel/rear-wheel determination unit 79 determines that the front wheel has climbed up on the step 200, the step determination unit 81 cancels the climb-over determination (step ST54). Therefore, for example, if only the front wheel contacts a curb due to an inner wheel difference, the vehicle 100 can continue to travel rearward as requested by the driver.

Next, modifications of the present embodiment will be described.

In the above embodiments, the vehicle 100 is configured as an electric vehicle that travels using the driving force of the rotary electric machine 106. However, the vehicle 100 may be a vehicle that travels using the driving force of an internal combustion engine, or may be a hybrid vehicle that travels using the driving forces of both the rotary electric machine 106 and an internal combustion engine. In this case, the driving force acquisition unit 31 may acquire the driving force applied by the vehicle 100 to the road surface based on signals from torque sensors provided on the wheels 104, for example.

In the above embodiments, the control device 10 is mounted in the vehicle 100, but may be mounted in an external device other than the vehicle 100. An external device may be communicably connected to the vehicle 100, and the vehicle 100 may travel in response to commands from the external device. The external device may be a dedicated command device or a server.

In the above embodiments, the control device 10 has the acquisition unit 30, the estimation unit 60, the determination unit 70, and the instruction unit 90. However, the control device may be divided into a first control device having the acquisition unit 30, the estimation unit 60, and the determination unit 70, and a second control device having the instruction unit 90.

Both the first control device and the second control device may be mounted in the vehicle 100, or one of them may be mounted in an external device. The first control device and the second control device may be mounted in the same external device, or may be mounted in different external devices.

The device and techniques described in the present disclosure may be implemented by a dedicated computer in which a processor is programmed to perform one or more functions embodied by a computer program. Alternatively, the device and techniques described in the present disclosure may be implemented by a dedicated computer in which the processor is configured by a dedicated hardware logic circuit. Alternatively, the device and techniques described in the present disclosure may be implemented by one or more dedicated computers in which a processor executing a computer program and one or more hardware logic circuits are combined. The computer program may be stored in a computer-readable non-transitory tangible memory medium as instructions to be executed by a computer.

The above describes embodiments of the present disclosure, but the present invention is not limited to the above, and it goes without saying that the present invention can be carried out in various modified forms within the scope of the gist of the present invention.

The features of the present disclosure are as follows:

(Supplementary Note 1)

A control device (10) including:

a driving force acquisition unit (31) configured to acquire driving force applied by a vehicle (100) to a road surface;
a longitudinal acceleration acquisition unit (32) configured to acquire longitudinal acceleration that is acceleration along a longitudinal direction of the vehicle;
an angle calculation unit (61) configured to calculate a trajectory angle ($\theta$) that is an angle formed by a trajectory of a rotation center axis of a wheel (104) of the vehicle with respect to the road surface, based on the driving force and the longitudinal acceleration; and

a height estimation unit (62) configured to estimate a step height (H, H1 to H3) that is a height of a step (200) provided on the road surface, based on the trajectory angle.

(Supplementary Note 2)

The control device according to Supplementary Note 1, further including a step determination unit (81) configured to determine whether the vehicle should climb-over the step based on the step height.

(Supplementary Note 3)

The control device according to Supplementary Note 1 or 2, in which the height estimation unit is configured to estimate the step height (H1) based on maximum value ($\theta_{max}$) of the trajectory angle, a ground contact length (L) of the wheel, and a dynamic radius (R) of the wheel.

(Supplementary Note 4)

The control device according to any one of Supplementary Notes 1 to 3, in which the height estimation unit is configured to estimate the step height (H2) based on a rate of change ($\kappa$) of the trajectory angle, the ground contact length of the wheel, and the dynamic radius of the wheel.

(Supplementary Note 5)

The control device according to any one of Supplementary Notes 1 to 4, in which the height estimation unit is configured to estimate the step height (H3) based on the maximum value of the trajectory angle, a downward gradient (Ke) of the trajectory angle, and the ground contact length of the wheel.

(Supplementary Note 6)

The control device according to Supplementary Note 1 or 2, in which the height estimation unit is configured to:

estimate a first step height (H1) as the step height based on maximum value of the trajectory angle, a ground contact length of the wheel, and a dynamic radius of the wheel,
estimate a second step height (H2) as the step height based on a rate of change of the trajectory angle, the ground contact length of the wheel, and the dynamic radius of the wheel,
estimate a third step height (H3) as the step height based on the maximum value of the trajectory angle, a downward gradient of the trajectory angle, and the ground contact length of the wheel, and
select the maximum value among the first step height, the second step height, and the third step height, as the step height.

(Supplementary Note 7)

The control device according to Supplementary Note 2, in which the height estimation unit is configured to:

estimate a first step height as the step height based on maximum value of the trajectory angle, a ground contact length of the wheel, and a dynamic radius of the wheel,
estimate a second step height as the step height based on a rate of change of the trajectory angle, the ground contact length of the wheel, and the dynamic radius of the wheel, and
select the maximum value between the first step height and the second step height as the step height, and
the step determination unit is configured to determine whether the vehicle should climb-over the step based on the step height and a predetermined threshold height.

(Supplementary Note 8)

The control device according to any one of Supplementary Notes 1 to 7, further including:

a lateral acceleration acquisition unit (34) configured to acquire lateral acceleration that is acceleration along a lateral direction of the vehicle;

a yaw rate acquisition unit (35) configured to acquire a yaw rate of the vehicle;

a proportional value calculation unit (72, 72A) configured to calculate a lateral acceleration proportional value ($\delta_G$) that is a value obtained by comparing the lateral acceleration with the yaw rate, based on the lateral acceleration and the yaw rate; and

a two-wheel/one-wheel determination unit (73) configured to determine whether the wheels on left and right sides have climbed up on the step, or whether the wheel on one side has climbed up on the step, based on the lateral acceleration proportional value.

(Supplementary Note 9)

The control device according to any one of Supplementary Notes 1 to 8, further including:

a wheel speed acquisition unit (36) configured to acquire a wheel speed that is a speed of the wheel;

an actual yaw rate acquisition unit (37) configured to acquire an actual yaw rate of the vehicle;

a wheel speed yaw rate acquisition unit (38) configured to acquire a wheel speed yaw rate that is a yaw rate corresponding to the wheel speed;

a proportional value calculation unit (72, 72B) configured to calculate a yaw rate proportional value ($\delta_r$) that is a value obtained by comparing the wheel speed yaw rate with the actual yaw rate based on the actual yaw rate and the wheel speed yaw rate; and

a two-wheel/one-wheel determination unit configured to determine whether the wheels on the left and right sides have climbed up on the step or whether the wheel on one side has climbed up on the step based on the yaw rate proportional value.

(Supplementary Note 10)

The control device according to any one of Supplementary Notes 1 to 7, further including:

a vehicle speed acquisition unit configured to acquire a vehicle speed that is a speed of the vehicle;

a lateral acceleration acquisition unit configured to acquire lateral acceleration that is acceleration along a lateral direction of the vehicle;

a wheel speed acquisition unit configured to acquire a wheel speed that is a speed of the wheels on left and right sides;

an actual yaw rate acquisition unit configured to acquire an actual yaw rate of the vehicle;

a wheel speed yaw rate acquisition unit configured to acquire a wheel speed yaw rate that is a yaw rate corresponding to the wheel speed;

a first proportional value calculation unit (72A) configured to calculate a lateral acceleration proportional value that is a value obtained by comparing the lateral acceleration with the actual yaw rate or the wheel speed yaw rate, based on the lateral acceleration and the actual yaw rate or the wheel speed yaw rate;

a second proportional value calculation unit (72B) configured to calculate a yaw rate proportional value that is a value obtained by comparing the wheel speed yaw rate with the actual yaw rate, based on the actual yaw rate and the wheel speed yaw rate; and

a two-wheel/one-wheel determination unit configured to, if the vehicle speed is lower than or equal to a predetermined threshold speed, perform a two-wheel/one-wheel determination to determine whether the two wheels on left and right sides have climbed up on the step or whether the wheel on one side has climbed up on the step, based on the lateral acceleration proportional value, and, if the vehicle speed exceeds the threshold speed, perform the two-wheel/one-wheel determination based on the yaw rate proportional value.

(Supplementary Note 11)

The control device according to any one of Supplementary Notes 8 to 10, further including a height correction unit (62) configured to correct the step height based on a result of the determination by the two-wheel/one-wheel determination unit.

(Supplementary Note 12)

The control device according to any one of Supplementary Notes 1 to 11, further including:

the vehicle speed acquisition unit configured to acquire a vehicle speed that is a speed of the vehicle;

a front wheel speed acquisition unit (36A) configured to acquire a front wheel speed that is a speed of a front wheel;

a rear wheel speed acquisition unit (36B) configured to acquire a rear wheel speed that is a speed of a rear wheel;

an actual acceleration acquisition unit (39) configured to acquire an actual acceleration along the longitudinal direction of the vehicle;

an acceleration estimation unit (77) configured to estimate an estimated acceleration along a traveling direction of the vehicle based on the front wheel speed or the rear wheel speed;

a gradient acceleration calculation unit (78) configured to calculate a gradient acceleration that is a difference between the actual acceleration and the estimated acceleration; and

a front-wheel/rear-wheel determination unit (79) configured to, if the vehicle speed is lower than or equal to a predetermined threshold speed, perform front-wheel/rear-wheel determination to determine whether the front wheel has climbed up on the step or the rear wheel has climbed up on the step, based on an estimated step height ($H_{slope}$) estimated from the gradient acceleration and the step height, and, if the vehicle speed exceeds the threshold speed, perform the front-wheel/rear-wheel determination based on the front wheel speed and the rear wheel speed.

(Supplementary Note 13)

The control device according to any one of Supplementary Notes 1 to 12, further including a step determination unit (81) configured to determine whether the vehicle should climb-over the step based on the step height,

wherein while the vehicle is traveling forward, if the front-wheel/rear-wheel determination unit determines that the front wheel has climbed up on the step, the step determination unit executes a climb-over determination to determine whether the vehicle should climb-over the step, and if the front-wheel/rear-wheel determination unit determines that the rear wheel has climbed up on the step, the step determination unit cancels the climb-over determination.

(Supplementary Note 14)

The control device according to any one of Supplementary Notes 1 to 13, further including a step determination unit (81) configured to determine whether the vehicle should climb-over the step based on the step height,

wherein while the vehicle is traveling rearward, if the front-wheel/rear-wheel determination unit determines that the rear wheel has climbed up on the step, the step determination unit executes the climb-over determination to determine whether the vehicle should climb-over the step, and if the front-wheel/rear-wheel determination unit determines that the front wheel has climbed up on the step, the step determination unit cancels the climb-over determination.

(Supplementary Note 15)

A control program (20) for causing a computer (10) to execute processing including:

a driving force acquisition step for acquiring driving force applied by a vehicle to a road surface;

a longitudinal acceleration acquisition step for acquiring longitudinal acceleration that is acceleration along a longitudinal direction of the vehicle;

an angle calculation step for calculating a trajectory angle that is an angle formed by a trajectory of a rotation center axis of a wheel of the vehicle with respect to the road surface, based on the driving force and the longitudinal acceleration; and

a height estimation step for estimating a step height that is a height of a step provided on the road surface, based on the trajectory angle.

**Claims**

1.   A control device (10) comprising:

a driving force acquisition unit (31) configured to acquire driving force applied by a vehicle (100) to a road surface;

a longitudinal acceleration acquisition unit (32) configured to acquire longitudinal acceleration that is acceleration along a longitudinal direction of the vehicle;

an angle calculation unit (61) configured to calculate a trajectory angle ($\theta$) that is an angle formed by a trajectory of a rotation center axis of a wheel (104) of the vehicle with respect to the road surface, based on the driving force and the longitudinal acceleration; and

a height estimation unit (62) configured to estimate a step height (H, H1 to H3) that is a height of a step (200) provided on the road surface, based on the trajectory angle.

**2.** The control device according to claim 1, further comprising a step determination unit (81) configured to determine whether the vehicle should climb-over the step based on the step height.

**3.** The control device according to claim 1 or 2, wherein the height estimation unit is configured to estimate the step height $(H1)$ based on maximum value $(\theta_{max})$ of the trajectory angle, a ground contact length $(L)$ of the wheel, and a dynamic radius $(R)$ of the wheel.

**4.** The control device according to any one of claims 1 to 3, wherein the height estimation unit is configured to estimate the step height $(H2)$ based on a rate of change $(\kappa)$ of the trajectory angle, the ground contact length of the wheel, and the dynamic radius of the wheel.

**5.** The control device according to any one of claims 1 to 4, wherein the height estimation unit is configured to estimate the step height $(H3)$ based on the maximum value of the trajectory angle, a downward gradient $(Ke)$ of the trajectory angle, and the ground contact length of the wheel.

**6.** The control device according to claim 1 or 2, wherein
the height estimation unit is configured to:

estimate a first step height $(H1)$ as the step height based on maximum value of the trajectory angle, a ground contact length of the wheel, and a dynamic radius of the wheel,
estimate a second step height $(H2)$ as the step height based on a rate of change of the trajectory angle, the ground contact length of the wheel, and the dynamic radius of the wheel,
estimate a third step height $(H3)$ as the step height based on the maximum value of the trajectory angle, a downward gradient of the trajectory angle, and the ground contact length of the wheel, and
select the maximum value among the first step height, the second step height, and the third step height, as the step height.

**7.** The control device according to claim 2, wherein
the height estimation unit is configured to:

estimate a first step height as the step height based on maximum value of the trajectory angle, a ground contact length of the wheel, and a dynamic radius of the wheel,
estimate a second step height as the step height based on a rate of change of the trajectory angle, the ground contact length of the wheel, and the dynamic radius of the wheel, and
select the maximum value between the first step height and the second step height as the step height, and
the step determination unit is configured to determine whether the vehicle should climb-over the step based on the step height and a predetermined threshold height.

**8.** The control device according to any one of claims 1 to 7, further comprising:

a lateral acceleration acquisition unit (34) configured to acquire lateral acceleration that is acceleration along a lateral direction of the vehicle;
a yaw rate acquisition unit (35) configured to acquire a yaw rate of the vehicle;
a proportional value calculation unit (72, 72A) configured to calculate a lateral acceleration proportional value $(\delta_G)$ that is a value obtained by comparing the lateral acceleration with the yaw rate, based on the lateral acceleration and the yaw rate; and
a two-wheel/one-wheel determination unit (73) configured to determine whether the wheels on left and right sides have climbed up on the step, or whether the wheel on one side has climbed up on the step, based on the lateral acceleration proportional value.

**9.** The control device according to any one of claims 1 to 8, further comprising:

a wheel speed acquisition unit (36) configured to acquire a wheel speed that is a speed of the wheel;
an actual yaw rate acquisition unit (37) configured to acquire an actual yaw rate of the vehicle;
a wheel speed yaw rate acquisition unit (38) configured to acquire a wheel speed yaw rate that is a yaw rate corresponding to the wheel speed;
a proportional value calculation unit (72, 72B) configured to calculate a yaw rate proportional value $(\delta_r)$ that is a value obtained by comparing the wheel speed yaw rate with the actual yaw rate based on the actual yaw rate and the wheel speed yaw rate; and

a two-wheel/one-wheel determination unit configured to determine whether the wheels on the left and right sides have climbed up on the step or whether the wheel on one side has climbed up on the step based on the yaw rate proportional value.

10. The control device according to any one of claims 1 to 7, further comprising:

a vehicle speed acquisition unit configured to acquire a vehicle speed that is a speed of the vehicle;

a lateral acceleration acquisition unit configured to acquire lateral acceleration that is acceleration along a lateral direction of the vehicle;

a wheel speed acquisition unit configured to acquire a wheel speed that is a speed of the wheels on left and right sides;

an actual yaw rate acquisition unit configured to acquire an actual yaw rate of the vehicle;

a wheel speed yaw rate acquisition unit configured to acquire a wheel speed yaw rate that is a yaw rate corresponding to the wheel speed;

a first proportional value calculation unit (72A) configured to calculate a lateral acceleration proportional value that is a value obtained by comparing the lateral acceleration with the actual yaw rate or the wheel speed yaw rate, based on the lateral acceleration and the actual yaw rate or the wheel speed yaw rate;

a second proportional value calculation unit (72B) configured to calculate a yaw rate proportional value that is a value obtained by comparing the wheel speed yaw rate with the actual yaw rate, based on the actual yaw rate and the wheel speed yaw rate; and

a two-wheel/one-wheel determination unit configured to, in response to the vehicle speed being lower than or equal to a predetermined threshold speed, perform a two-wheel/one-wheel determination to determine whether the wheels on left and right sides have climbed up on the step or whether the wheel on one side has climbed up on the step, based on the lateral acceleration proportional value, and, in response to the vehicle speed exceeding the threshold speed, perform the two-wheel/one-wheel determination based on the yaw rate proportional value.

11. The control device according to any one of claims 8 to 10, further comprising a height correction unit (62) configured to correct the step height based on a result of the determination by the two-wheel/one-wheel determination unit.

12. The control device according to any one of claims 1 to 11, further comprising:

a vehicle speed acquisition unit configured to acquire a vehicle speed that is a speed of the vehicle;

a front wheel speed acquisition unit (36A) configured to acquire a front wheel speed that is a speed of a front wheel;

a rear wheel speed acquisition unit (36B) configured to acquire a rear wheel speed that is a speed of a rear wheel;

an actual acceleration acquisition unit (39) configured to acquire an actual acceleration along the longitudinal direction of the vehicle;

an acceleration estimation unit (77) configured to estimate an estimated acceleration along a traveling direction of the vehicle based on the front wheel speed or the rear wheel speed;

a gradient acceleration calculation unit (78) configured to calculate a gradient acceleration that is a difference between the actual acceleration and the estimated acceleration; and

a front-wheel/rear-wheel determination unit (79) configured to, in response to the vehicle speed being lower than or equal to a predetermined threshold speed, perform front-wheel/rear-wheel determination to determine whether the front wheel has climbed up on the step or the rear wheel has climbed up on the step, based on an estimated step height ($H_{slope}$) estimated from the gradient acceleration and the step height, and, in response to the vehicle speed exceeding the threshold speed, perform the front-wheel/rear-wheel determination based on the front wheel speed and the rear wheel speed.

13. The control device according to any one of claims 1 to 12, further comprising a step determination unit (81) configured to determine whether the vehicle should climb-over the step based on the step height,

wherein the step determination unit is configured to, while the vehicle is traveling forward,

in response to the front-wheel/rear-wheel determination unit determining that the front wheel has climbed up on the step, execute a climb-over determination to determine whether the vehicle should climb-over the step, and

in response to the front-wheel/rear-wheel determination unit determining that the rear wheel has climbed up on the step, cancel the climb-over determination.

14. The control device according to any one of claims 1 to 13, further comprising a step determination unit (81) configured to determine whether the vehicle should climb-over the step based on the step height,

wherein the step determination unit is configured to, while the vehicle is traveling rearward,
in response to the front-wheel/rear-wheel determination unit determining that the rear wheel has climbed up on the step, execute the climb-over determination to determine whether the vehicle should climb-over the step, and
in response to the front-wheel/rear-wheel determination unit determining that the front wheel has climbed up on the step, cancel the climb-over determination.

15. A control program (20) for causing a computer (10) to execute processing comprising:

a driving force acquisition step for acquiring driving force applied by a vehicle to a road surface;
a longitudinal acceleration acquisition step for acquiring longitudinal acceleration that is acceleration along a longitudinal direction of the vehicle;
an angle calculation step for calculating a trajectory angle that is an angle formed by a trajectory of a rotation center axis of a wheel of the vehicle with respect to the road surface, based on the driving force and the longitudinal acceleration; and
a height estimation step for estimating a step height that is a height of a step provided on the road surface, based on the trajectory angle.

# FIG.1

EP 4 729 383 A1

# FIG.2

EP 4 729 383 A1

# FIG.3

CONTROL DEVICE  10

CPU  12

CONTROL PROCESS

30 — ACQUISITION UNIT
50 — CALCULATION UNIT
60 — ESTIMATION UNIT
70 — DETERMINATION UNIT
90 — INSTRUCTION UNIT

ROM  14
CONTROL PROGRAM  20

RAM  16

STORAGE  18

EP 4 729 383 A1

# FIG.4

CONTROL DEVICE — 10

CONTROL PROCESS

SENSOR GROUP — 130

ACQUISITION UNIT — 30

CALCULATION UNIT — 50

ESTIMATION UNIT — 60
- HEIGHT ESTIMATION PROCESS

DETERMINATION UNIT — 70
- TWO-WHEEL/ONE-WHEEL DETERMINATION PROCESS
- RIGHT-AFTER-START DETERMINATION PROCESS
- FRONT-WHEEL/REAR-WHEEL DETERMIANTION PROCESS
- MODE DETERMIANTION PROCESS
- STEP DETERMIANTION PROCESS

INSTRUCTION UNIT — 90

30

# FIG.5

CONTROL DEVICE  ⟶ 10

SENSOR GROUP (130)
- CURRENT SENSOR (131)
- LONGITUDINAL ACCELERATION SENSOR (132)
- WHEEL SPEED SENSOR (133)

ACQUISITION UNIT (30)
- DRIVING FORCE ACQUISITION UNIT (31)
- LONGITUDINAL ACCELERATION ACQUISITION UNIT (32)
- VEHICLE SPEED ACQUISITION UNIT (33)

ESTIMATION UNIT (60)
- HEIGHT ESTIMATION RPOCESS
  - ANGLE CALCULATION UNIT (61)
  - HEIGHT ESTIMATION UNIT (62)

EP 4 729 383 A1

FIG.6A

HEIGHT

200

θ

0    x1    x2    TRAVELING DISTANCE

FIG.6B

θ

CLIMB-UP DISTANCE

θmax

k    Kθ

0    x1    x2    TRAVELING DISTANCE

# FIG.7

EP 4 729 383 A1

# FIG.8

EP 4 729 383 A1

# FIG.9

EP 4 729 383 A1

# FIG.10

CONTROL DEVICE 10

SENSOR GROUP 130

- LONGITUDINAL ACCELERATION SENSOR 132
- WHEEL SPEED SENSOR 133
- SHIFT POSITION SENSOR 136

ACQUISITION UNIT 30

- VEHICLE SPEED ACQUISITION UNIT 33
- FRONT WHEEL SPEED ACQUISITION UNIT 36A
- REAR WHEEL SPEED ACQUISITION UNIT 36B
- ACTUAL ACCELERATION ACQUISITION UNIT 39
- SHIFT POSITION ACQUISITION UNIT 40

ESTIMATION UNIT 60

- HEIGHT ESTIMATION UNIT 62

DETERMINATION UNIT 70

FRONT-WHEEL/REAR-WHEEL DETERMINATION PROCESS

- HEIGHT DETERMINATION UNIT 71
- VEHICLE SPEED DETERMINATION UNIT 74
- SHIFT POSITION DETERMINATION UNIT 75
- PARAMETER SELECTION UNIT 76
- ACCELERATION ESTIMATION UNIT 77
- GRADIENT ACCELERATION CALCULATION UNIT 78
- FRONT-WHEEL/REAR-WHEEL DETERMIANTION UNIT 79

# FIG.11

CONTROL DEVICE 10

ESTIMATION UNIT 60

HEIGHT ESTIMATION UNIT 62

DETERMINATION UNIT 70

STEP DETERMIANTION PROCESS

TWO-WHEEL/ ONE-WHEEL DETERMINATION UNIT 73

FRONT-WHEEL/ REAR-WHEEL DETERMINATION UNIT 79

HEIGHT CORRECTION UNIT 80

STEP DETERMIANTION UNIT 81

EP 4 729 383 A1

EP 4 729 383 A1

# FIG.12

# FIG.13

EP 4 729 383 A1

# FIG.14

CONTROL DEVICE — 10

SENSOR GROUP — 130

WHEEL SPEED SENSOR — 133

ACQUISITION UNIT — 30

VECHILE SPEED ACQUISITION UNIT — 33

DETERMINATION UNIT — 70

HEIGHT CORRECTION UNIT — 80

STEP DETERMINATION UNIT — 81

RIGHT-AFTER-START DETERMINATION UNIT — 84

MODE DETERMIANTION PROCESS

MODE DETERMIANTION UNIT — 85

# FIG.15

EP 4 729 383 A1

# FIG.16

START (CONTROL PROCESS)

CALCULATE TRAJECTORY ANGLE — ST10

ESTIMATE FIRST STEP HEIGHT — ST12

ESTIMATE SECOND STEP HEIGHT — ST14

ESTIMATE THIRD STEP HEIGHT — ST16

SELECT MAXIMUM VALUE AS STEP HEIGHT — ST18

SELECT MAXIMUM VALUE AS STEP HEIGHT — ST20

**ST22** TWO-WHEEL/ ONE-WHEEL DETERMINATION PROCESS
- ONE SIDE → DOUBLE STEP HEIGHT — ST24
- TWO SIDES → USE STEP HEIGHT AS IS — ST26

**ST28** TWO-WHEEL/ ONE-WHEEL DETERMINATION PROCESS
- ONE SIDE → DOUBLE STEP HEIGHT — ST30
- TWO SIDES → USE STEP HEIGHT AS IS — ST32

**ST34** FRONT-WHEEL/ REAR-WHEEL DETERMINATION PROCESS
- REAR WHEEL DURING FORWARD TRAVELING/ FRONT WHEEL DURING REARWARD TRAVELING
- FRONT WHEEL DURING FORWARD TRAVELING/ REAR WHEEL DURING REARWARD TRAVELING → **ST38** STEP HEIGHT > THRESHOLD HEIGHT ?
  - NO → DETERMINE AS STEP NOT TO BE CLIMBED OVER — ST42
  - YES → DETERMINE AS STEP TO BE CLIMBED OVER — ST40

**ST36** FRONT-WHEEL/ REAR-WHEEL DETERMINATION PROCESS
- REAR WHEEL DURING FORWARD TRAVELING/ FRONT WHEEL DURING REARWARD TRAVELING
- FRONT WHEEL DURING FORWARD TRAVELING/ REAR WHEEL DURING REARWARD TRAVELING → **ST44** CURRENT STEP HEIGHT > PREVIOUS STEP HEIGHT ?
  - YES → USE PREVIOUS STEP HEIGHT — ST46
  - NO → USE CURRENT STEP HEIGHT — ST48

PERFORM RIGHT-AFTER-START DETERMINATION PROCESS — ST50

PERFORM MODE DETERMINATION PROCESS — ST52

END ESTIMATION PROCESS — ST54

RETURN

# FIG.17

START
(TWO-WHEEL/ONE-WHEEL
DETERMINATION PROCESS)

ST60

STEP HEIGHT >
PRESCRIBED HEIGHT ?

YES

NO

ST62

CALCULATE
LATERAL ACCELERATION
PROPORTIONAL VALUE

ST64

| LATERAL
ACCELERATION
PROPORTIONAL VALUE | ≦
THRESHOLD
VALUE ?

YES

NO

ST66

DETERMINE AS TWO WHEELS

ST68

DETERMINE AS ONE WHEEL

RETURN

# FIG.18

START
(TWO-WHEEL/ONE-WHEEL
DETERMINATION PROCESS)

ST70

STEP HEIGHT >
PRESCRIBED HEIGHT ?

YES

NO

ST72

CALCULATE YAW RATE
PROPORTIONAL VALUE

ST74

| YAW RATE
PROPORTIONAL VALUE | ≦
THRESHOLD
VALUE ?

YES

NO

ST76

DETERMINE AS TWO WHEELS

ST78

DETERMINE AS ONE WHEEL

RETURN

# FIG.19

START
(TWO-WHEEL/ONE-WHEEL
DETERMINATION PROCESS)

ST80
VEHICLE SPEED ≦ THRESHOLD SPEED ? — NO

YES

ST82
STEP HEIGHT > PRESCRIBED HEIGHT ? — YES

NO

ST86
CALCULATE LATERAL ACCELERATION PROPORTIONAL VALUE

ST88
| LATERAL ACCELERATION PROPORTIONAL VALUE | ≦ THRESHOLD VALUE ? — YES

NO

ST84
STEP HEIGHT > PRESCRIBED HEIGHT ? — YES

NO

ST90
CALCULATE YAW RATE PROPORTIONAL VALUE

ST92
| YAW RATE PROPORTIONAL VALUE | ≦ THRESHOLD VALUE ? — YES

NO

ST94
DETERMINE AS TWO WHEELS

ST96
DETERMINE AS ONE WHEEL

RETURN

EP 4 729 383 A1

# FIG.20

EP 4 729 383 A1

# FIG.21

START
(RIGHT−AFTER−START
DETERMINATION PROCESS)

ST130

ESTIMATION
PERMISSION CONDITIONS
SATISFIED ?

NO

YES

ST132

STEP HEIGHT >
PRESCRIBED HEIGHT ?

NO

YES

ST134

WHEEL SPEED $\leqq$
THRESHOLD SPEED ?

NO

YES

ST136

DETERMINE AS RIGHT AFTER START

RETURN

# FIG.22

EP 4 729 383 A1

# FIG.23

EP 4 729 383 A1

FIG.24

DEPRESS ACCELERATOR PEDAL

START ESTIMATION PROCESS

DETERMINE AS CONTACT OF FRONT WHEEL

DETERMINE AS CONTACT OF ONE WHEEL

LEFT FRONT WHEEL
RIGHT FRONT WHEEL
LEFT REAR WHEEL
RIGHT REAR WHEEL
ESTIMATED VALUE

LONGITUDINAL ACCELERATION
LATERAL ACCELRATION
VERTICAL ACCELRATION

DRIVING FORCE REDUCTION,
DECELERATION WITH
REGENERATIVE TORQUE

REQUESTED VALUE
FRONT WHEEL MOTOR
REAR WHEEL MOTOR

START VEHICLE SPEED LIMIT CONTROL

EP 4 729 383 A1

# FIG.25

EP 4 729 383 A1

FIG.26A

FIG.26B

FIG.27A

FIG.27B

FIG.28A

FIG.28B

EP 4 729 383 A1

| FIG.29A | |
| FIG.29B | |

FIG.29A

104 100 104
200
MG
106
104 104

FIG.29B

CONTINUE TRAVELING WITH
TORQUE REQUESTED BY
DRIVER WITHOUT SUPPRESSING
DRIVING FORCE

104
START
200
104
104
200

EP 4 729 383 A1

| | |
|---|---|
| FIG.30A | |
| FIG.30B | |

| | |
|---|---|
| FIG.31A | |
| FIG.31B | |

**FIG.32A**

**FIG.32B**

STOP VEHICLE WITH
SUPPRESSION OF
DRIVING FORCE

START

# EP 4 729 383 A1

## INTERNATIONAL SEARCH REPORT

International application No.

**PCT/JP2024/016128**

### A. CLASSIFICATION OF SUBJECT MATTER

**B60W 40/06**(2012.01)i; **B60W 40/114**(2012.01)i
FI: B60W40/06; B60W40/114

According to International Patent Classification (IPC) or to both national classification and IPC

### B. FIELDS SEARCHED

Minimum documentation searched (classification system followed by classification symbols)

B60W10/00-10/30; B60W30/00-60/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2006-1481 A (MAEDA ROAD CONSTRUCTION CO., LTD.) 05 January 2006 (2006-01-05)<br>paragraphs [0009]-[0041], fig. 1-4. 19-24 | 1-15 |
| A | JP 11-334568 A (AISIN SEIKI KABUSHIKI KAISHA) 07 December 1999 (1999-12-07)<br>paragraphs [0009]-[0020], fig. 1-2 | 1-15 |
| A | JP 2022-180841 A (MAZDA MOTOR CORPORATION) 07 December 2022 (2022-12-07)<br>paragraphs [0021]-[0065], fig. 1-7 | 1-15 |
| A | JP 2018-144620 A (DENSO TEN LTD.) 20 September 2018 (2018-09-20)<br>paragraphs [0010]-[0024], fig. 1-2 | 1-15 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/016128**

| Patent document cited in search report | | | Publication date (day/month/year) | Patent family member(s) | Publication date (day/month/year) |
|---|---|---|---|---|---|
| JP | 2006-1481 | A | 05 January 2006 | (Family: none) | |
| JP | 11-334568 | A | 07 December 1999 | US 6301540 B1 column 2, line 62 to column 5, line 64, fig. 1-2 DE 19924021 A1 | |
| JP | 2022-180841 | A | 07 December 2022 | (Family: none) | |
| JP | 2018-144620 | A | 20 September 2018 | (Family: none) | |

Form PCT/ISA/210 (patent family annex) (July 2022)

**EP 4 729 383 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023097275 A
- JP 2019093761 A